# EUROPEAN PATENT APPLICATION

(11) **EP 4 776 715 A1**
(43) Date of publication of application: **15.07.2026**
(21) Application number: 24863220.0
(22) Date of filing: 05.09.2024
(51) Int. Cl.: H04W 68/02, H04W 76/27, H04W 74/0833, H04W 76/19

(54) **DEVICE AND METHOD FOR TRANSMITTING SMALL DATA IN WIRELESS COMMUNICATION SYSTEM**

(30) Priority: 07.09.2023 US 202363536933 P
(71) Applicant: LG Electronics Inc., Yeongdeungpo-gu Seoul 07336 (KR)
(72) Inventor: HAN, Jaemin, Seoul 06772 (KR); BYUN, Daewook, Seoul 06772 (KR); KIM, Seokjung, Seoul 06772 (KR)
(74) Representative: Frenkel, Matthias Alexander
(86) International application number: PCT/KR2024/013415
(87) International publication number: WO 2025/053641

(57) **Abstract**

The present disclosure is for transmitting small data in a wireless communication system. A method performed by a first network node may comprise the steps of: transmitting a modification request message to a second network node; receiving, from the second network node, an acknowledgement message for the modification request; transmitting a radio resource control (RRC) connection release message to a terminal in order to change the state of the terminal to an RRC inactive state; receiving an activity notification message from the second network node; and transmitting a paging message to the terminal.

## Description

### TECHNICAL FIELD

The following description relates to a wireless communication system, and specifically, to an apparatus and method for transmitting small data in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to an apparatus and method for effectively transmitting small data in a wireless communication system.

The present disclosure relates to an apparatus and method for supporting Small Data Transmission (SDT) for a terminal configured to have a dual connectivity in a wireless communication system.

The present disclosure relates to an apparatus and method for supporting SDT while a terminal is in a Radio Resource Control (RRC) inactive state in a wireless communication system.

The present disclosure relates to an apparatus and method for supporting SDT while maintaining a Secondary Cell Group (SCG) of a terminal in a wireless communication system.

The present disclosure relates to an apparatus and method for determining whether to perform an SDT operation based on volume information of Downlink (DL) SDT data in a wireless communication system.

The present disclosure relates to an apparatus and method for transmitting a paging signal for SDT based on volume information of DL SDT data in a wireless communication system.

The present disclosure relates to an apparatus and method for changing a Secondary Node (SN) for a terminal during an SDT operation in a wireless communication system.

The present disclosure relates to an apparatus and method for transmitting non-SDT data arrived at a network node during an SDT operation in a wireless communication system.

The present disclosure relates to an apparatus and method for fully resuming an RRC connection of a terminal based on non-SDT data arrived at a network node during an SDT operation in a wireless communication system.

The present disclosure relates to an apparatus and method for terminating an SDT operation in a wireless communication system.

The present disclosure relates to an apparatus and method for sending back a terminal to an RRC inactive state based on an SDT termination request in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

As an example of the present disclosure, a method performed by a first network node in a wireless communication system includes transmitting a modification request message to a second network node, receiving an acknowledgement message for the modification request from the second network node, transmitting a radio resource control (RRC) connection release message to a terminal to change state of the terminal to RRC inactive state, receiving an activity notification message from the second network node, and transmitting a paging message to the terminal based on the activity notification message, wherein the activity notification message includes information about downlink small data for the terminal that arrived at the second network node, and wherein the paging message may indicate legacy paging or paging for the downlink small data transmission (SDT) based on the information about the downlink small data.

As an example of the present disclosure, a method performed by a second network node in a wireless communication system includes receiving a modification request message from a first network node, transmitting an acknowledgement message for the modification request to the second network node, transmitting an activity notification message to the first network node, resuming bearer for small data transmission (SDT) by request of the first network, and further comprising transmitting small data to the terminal through the resumed bearer, wherein the activity notification message may include information about downlink small data for the terminal that arrived at the second network node.

As an example of the present disclosure, a method performed by a terminal in a wireless communication system may include receiving an RRC connection release message from a first network node, receiving a paging message for downlink small data transmission (SDT) from the first network node, performing a random access procedure for a second network node, transmitting an RRC resume request message to the first network node, and receiving downlink small data from the second network node.

As an example of the present disclosure, a first network node in a wireless communication system includes a transceiver and a processor connected to the transceiver, wherein the processor controls to transmit a modification request message to a second network node, receive an acknowledgement message for the modification request from the second network node, transmit a radio resource control (RRC) connection release message to a terminal to change state of the terminal to RRC inactive state, receive an activity notification message from the second network node, and transmit a paging message to the terminal based on the activity notification message, wherein the activity notification message includes information about downlink small data for the terminal that arrived at the second network node, and wherein the paging message may indicate legacy paging or paging for the downlink small data transmission (SDT) based on the information about the downlink small data.

As an example of the present disclosure, a second network node in a wireless communication system includes a transceiver and a processor connected to the transceiver, wherein the processor controls to receive a modification request message from a first network node, transmit an acknowledgement message for the modification request to the second network node, transmit an activity notification message to the first network node, resume bearer for small data transmission (SDT) by request of the first network, and transmit small data to the terminal through the resumed bearer, wherein the activity notification message may include information about downlink small data for the terminal that arrived at the second network node.

As an example of the present disclosure, a terminal in a wireless communication system includes a transceiver and a processor connected to the transceiver, wherein the processor may control to receive an RRC connection release message from a first network node, receive a paging message for downlink small data transmission (SDT) from the first network node, perform a random access procedure for a second network node, transmit an RRC resume request message to the first network node, and receive downlink small data from the second network node.

As an example of the present disclosure, a communication apparatus includes at least one processor, and at least one computer memory connected to the at least one processor and storing instructions that direct operations when executed by the at least one processor, wherein the operations may include receiving an RRC connection release message from a first network node, receiving a paging message for downlink small data transmission (SDT) from the first network node, performing a random access procedure for a second network node, transmitting an RRC resume request message to the first network node, and receiving downlink small data from the second network node.

As an example of the present disclosure, a non-transitory computer-readable medium storing at least one instruction includes the at least one instruction executable by a processor, wherein the at least one instruction may control an apparatus to receive an RRC connection release message from a first network node, receive a paging message for downlink small data transmission (SDT) from the first network node, perform a random access procedure for a second network node, transmit an RRC resume request message to the first network node, and receive downlink small data from the second network node.

### ADVANTAGEOUS EFFECTS

The following effects may be achieved by embodiments based on the present disclosure.

The present disclosure can support small data transmission (SDT) for a terminal configured to have dual connectivity in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5a and FIG. 5b illustrates an example of an inter-MN handover procedure with/without MN initiated SN change procedure.
FIG. 6 illustrates an example of a successful procedure of S-NG-RAN node addition preparation.
FIG. 7 illustrates an example of an unsuccessful procedure of S-NG-RAN node addition preparation.
FIG. 8 illustrates an example of a procedure supporting an activity notification of MR-DC.
FIG. 9a and FIG. 9b illustrate an example of a procedure supporting A DL SDT data arrival at A SN according to an embodiment of the present disclosure.
FIG. 10a and FIG. 10b illustrate an example of procedure for changing SN during SDT according to an embodiment of the present disclosure.
FIG. 11 illustrates an example of a procedure supporting a DL Non-SDT at SN according to an embodiment of the present disclosure.
FIG. 12a and FIG. 12b illustrate an example of a procedure for changing SN for DL Non-SDT at SN according to an embodiment of the present disclosure.
FIG. 13 illustrates an example of a procedure supporting SDT termination request at SN according to an embodiment of the present disclosure.
FIG. 14a and FIG. 14b illustrate an example of a procedure for changing SN upon SDT termination request of SN according to an embodiment of the present disclosure.
FIG. 15 illustrates an example of procedure for transmitting paging message for DL SDT according to an embodiment of the present disclosure.
FIG. 16 illustrates an example of a procedure for transmitting DL SDT according to an embodiment of the present disclosure.
FIG. 17 illustrates an example of a procedure for receiving DL SDT according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

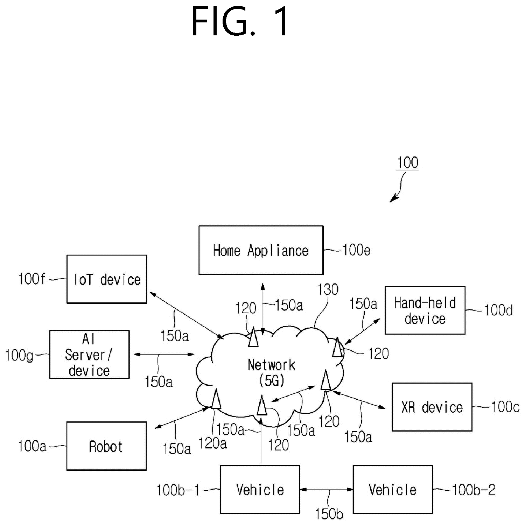

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

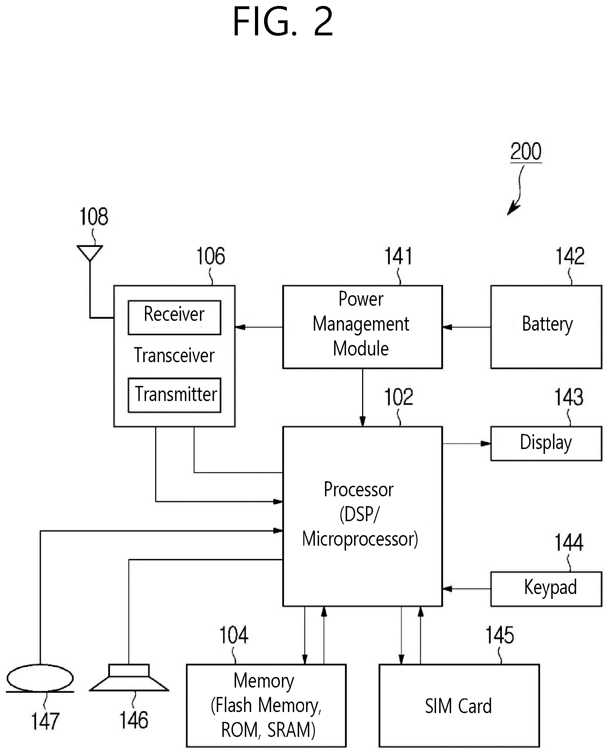

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

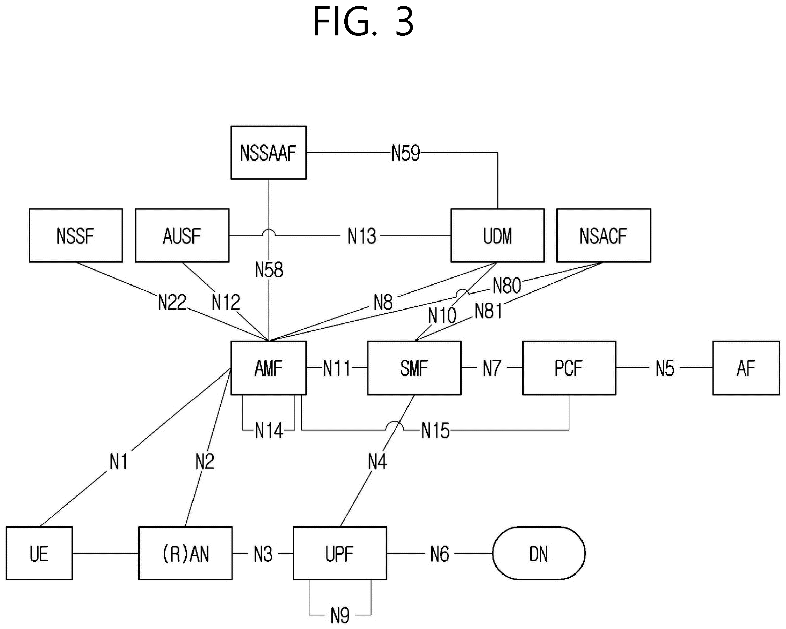

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

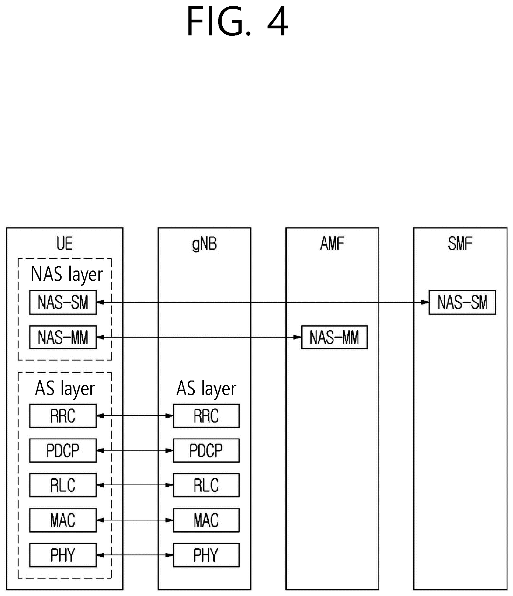

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

In the TS 37.340 specification document, the definition of MR-DC may be described as follows.

### 10.7.2 Multi-Radio Dual Connectivity (MR-DC) with 5GC

Inter-MN handover with/without MN initiated SN change is used to transfer UE context data from a source MN to a target MN while the UE context at the SN is kept or moved to another SN. During an inter-MN handover, the target MN decides whether to keep or change the SN (or release the SN, as described in clause 10.8). Only intra-RAT inter-MN handover with/without SN change is supported (e.g., no transition from NGEN-DC to NR-DC).

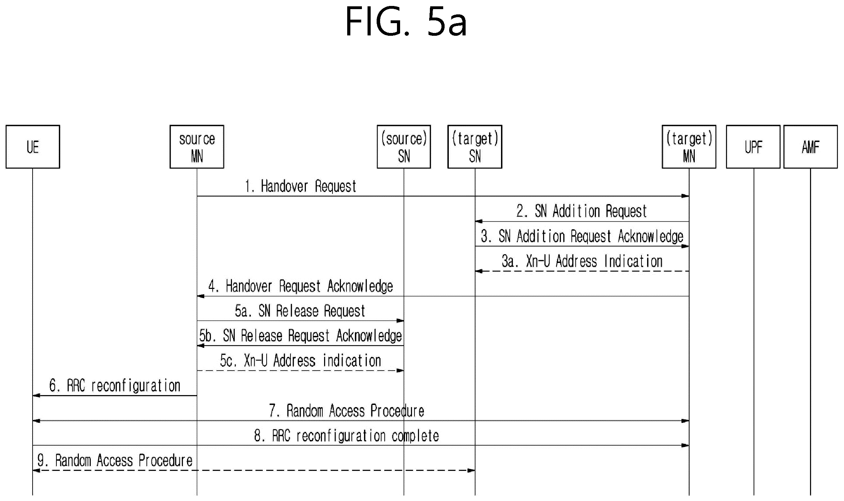

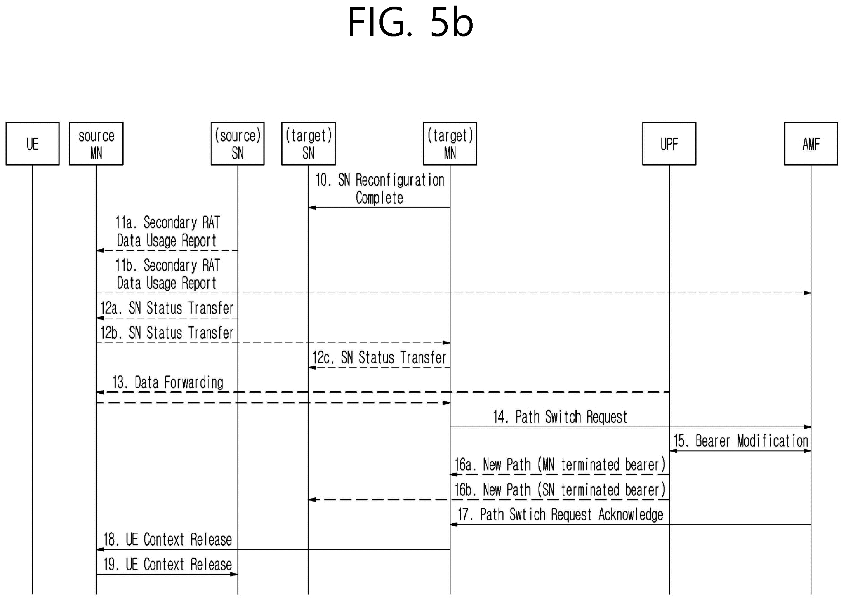

FIG. 5a and FIG. 5b illustrates an example of an inter-MN handover procedure with/without MN initiated SN change procedure.

NOTE 1: For an inter-Master Node handover without Secondary Node change, the source SN and the target SN shown in FIG. 5a and FIG. 5b are the same node.
1. The source MN starts the handover procedure by initiating the Xn handover preparation procedure including both MCG and SCG configuration. The source MN includes the source SN UE XnAP ID, SN ID and the UE context in the source SN in the handover request message.

NOTE 2: The source MN may trigger the MN-initiated SN modification procedure (to the source SN) to retrieve the current SCG configuration and to allow provision of data forwarding related information before step 1.

2. If the target MN decides to keep the UE context in source SN, the target MN sends SN addition request to the SN including the SN UE XnAP ID as a reference to the UE context in the SN that was established by the source MN. If the target MN decides to change the SN allowing delta configuration, the target MN sends the SN addition request to the target SN including the UE context in the source SN that was established by the source MN. Otherwise, the target MN may send the SN addition request to the target SN including neither the SN UE XnAP ID nor the UE context in the source SN that was established by the source MN.

3. The (target) SN replies with SN addition request acknowledge. The (target) SN may include the indication of the full or delta RRC configuration.

NOTE 2a0: In CHO with SCG configuration, it is up to the target MN implementation to make sure that the CG-Config provided from the (target) SN can be used in all CHO preparations.

3a. For SN terminated bearers using MCG resources, the target MN provides Xn-U DL TNL address information in the Xn-U Address Indication message.

4. The target MN includes within the handover request acknowledge message the MN RRC reconfiguration message to be sent to the UE in order to perform the handover, and may also provide forwarding addresses to the source MN. If PDU session split is performed in the target side during handover procedure, more than one data forwarding addresses corresponding to each node are included in the handover request acknowledge message. The target MN indicates to the source MN that the UE context in the SN is kept if the target MN and the SN decided to keep the UE context in the SN in Step 2 and Step 3.

5a/5b. The source MN sends SN release request message to the (source) SN including a cause indicating MCG mobility. The (source) SN acknowledges the release request. The source MN indicates to the (source) SN that the UE context in SN is kept, if it receives the indication from the target MN. If the indication as the UE context kept in SN is included, the SN keeps the UE context.

5c. The source MN sends XN-U address indication message to the (source) SN to transfer data forwarding information. More than one data forwarding addresses may be provided if the PDU session is split in the target side.

6. The source MN triggers the UE to perform handover and apply the new configuration.

7/8. The UE synchronizes to the target MN and replies with MN RRC reconfiguration complete message.

9. If configured with bearers requiring SCG radio resources, the UE synchronizes to the (target) SN.

NOTE 2a1: The order the UE performs random access towards the MN (Step 7) and performs the random access procedure towards the SN (Step 9) is not defined.

10. If the RRC connection reconfiguration procedure was successful, the target MN informs the (target) SN via SN Reconfiguration Complete message.

11a. The source SN sends the secondary RAT data usage report message to the source MN and includes the data volumes delivered to and received from the UE over the NR/E-UTRA radio as described in clause 10.11.2.

NOTE 2a2: The order the source SN sends the secondary RAT data usage report message and performs data forwarding with MN/target SN is not defined. The SN may send the report when the transmission of the related QoS is stopped.

11b. The source MN sends the secondary RAT report message to AMF to provide information on the used NR/E-UTRA resource.

12. For bearers using RLC AM, the source MN sends the SN status transfer message to the target MN, including, if needed, SN status received from the source SN. The target forwards the SN Status to the target SN, if needed.

13. If applicable, data forwarding takes place from the source side. If the SN is kept, data forwarding may be omitted for SN terminated bearers or QoS flows kept in the SN.

14-17. The target MN initiates the path switch procedure. If the target MN includes multiple DL TEIDs for one PDU session in the path switch request message, multiple UL TEID of the UPF for the PDU session should be included in the path switch acknowledge message in case there is TEID update in UPF.

NOTE 3: If new UL TEIDs of the UPF for SN are included, the target MN performs MN initiated SN modification procedure to provide them to the SN.

18. The target MN initiates the UE context release procedure towards the source MN.

19. Upon reception of the UE context release message from source MN, the (source) SN releases C-plane related resources associated to the UE context towards the source MN. Any ongoing data forwarding may continue. The SN shall not release the UE context associated with the target MN if the UE contest kept indication was included in the SN release request message in Step 5.

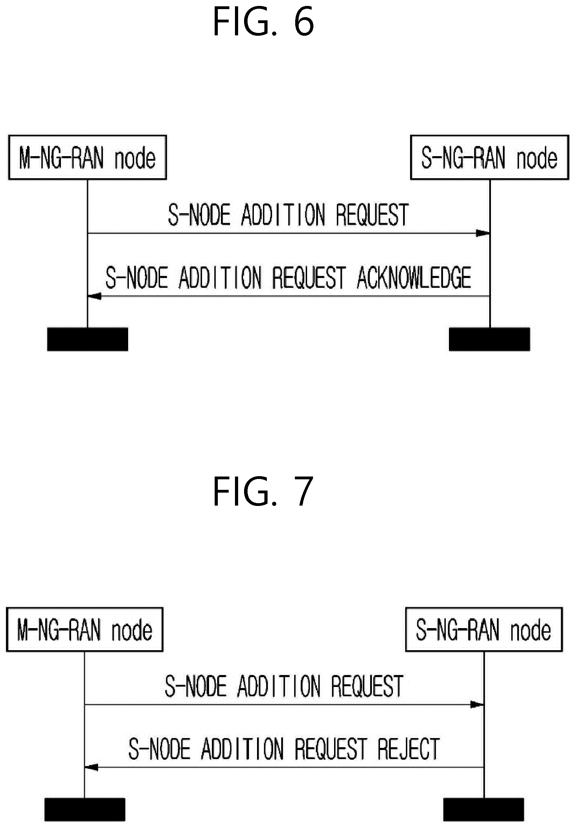

FIG. 6 illustrates an example of a successful procedure of S-NG-RAN node addition preparation, and FIG. 7 illustrates an example of an unsuccessful procedure of S-NG-RAN node addition preparation. S-NG-RAN node addition preparation is defined in the TS 38.423 specification document and is described as follows.

### 8.3.1 S-NG-RAN node addition preparation

### 8.3.1.1 General

The purpose of the S-NG-RAN node addition preparation procedure is to request the S-NG-RAN node to allocate resources for dual connectivity operation for a specific UE.

The procedure uses UE-associated signaling.

### 8.3.1.2 Successful operation

The M-NG-RAN node initiates the procedure by sending the S-NODE addition request message to the S-NG-RAN node.

When the M-NG-RAN node sends the S-NODE addition request message, it shall start the timer TXn.

The allocation of resources according to the values of the Allocation and Retention Priority IE included in the QoS Flow Level QoS Parameters IE for each QoS flow shall follow the principles specified for the PDU Session Resource Setup procedure in TS 38.413 [5].

The S-NG-RAN node shall choose the ciphering algorithm based on the information in the UE Security Capabilities IE and locally configured priority list of AS encryption algorithms and apply the key indicated in the S-NG-RAN node Security Key IE as specified in TS 33.501 [28].

If the TSC Traffic Characteristics IE is included for a QoS flow in the S-NODE addition request message, the S-NG-RAN node shall behave the same as the NG-RAN node in the PDU session resource Setup procedure, specified in TS 38.413 [5].

If the Additional QoS Flow Information IE is included for a QoS flow in the S-NODE addition request message, the S-NG-RAN node shall behave the same as the NG-RAN node in the PDU session resource setup procedure, specified in TS 38.413 [5].

For each GBR QoS flow, if the Alternative QoS Parameters Sets IE is included in the GBR QoS Flow Information IE, the S-NG-RAN node shall, if supported, behave the same as the NG-RAN node in the PDU Session Resource Setup procedure specified in TS 38.413 [5].

For each PDU session, if the Network Instance IE is included in the PDU Session Resource Setup Info - SN terminated IE contained in the PDU Session Resources To Be Added List IE and the Common Network Instance IE is not present, the S-NG-RAN node shall, if supported, use it when selecting transport network resource as specified in TS 23.501 [7].

For each GBR QoS flow, if the Offered GBR QoS Flow Information IE is included in the QoS Flows To Be Setup List IE contained in the PDU Session Resource Setup Info - SN terminated IE, the S-NG-RAN node may request the M-NG-RAN node to configure the DRB to which that QoS flow is mapped with MCG resources.

For each PDU session, if the Non-GBR Resources Offered IE is included in the PDU Session Resource Setup Info - SN terminated IE contained in the PDU Session Resources To Be Added List IE and set to "true", the S-NG-RAN node may request the M-NG-RAN node to configure DRBs to which non-GBR QoS flows of the PDU session are mapped with MCG resources.

For each PDU session, if the Common Network Instance IE is included in the PDU Session Resource Setup Info - SN terminated IE contained in the PDU Session Resources To Be Added List IE, the S-NG-RAN node shall, if supported, use it when selecting transport network resource as specified in TS 23.501 [7].

### Redundant transmission:

- For each PDU session, if the Redundant UL NG-U UP TNL Information at UPF IE is included in the PDU Session Resource Setup Info - SN terminated IE, the S-NG-RAN node shall, if supported, use it as the uplink termination point for the user plane data for this PDU session for the redundant transmission and it shall include the Redundant DL NG-U UP TNL Information at NG-RAN IE in the PDU Session Resource Setup Response Info - SN terminated IE as described in TS 23.501 [7].
- For each PDU session, if the Redundant Common Network Instance IE is included in the PDU Session Resource Setup Info - SN terminated IE the S-NG-RAN node shall, if supported, use it when selecting transport network resource for the redundant transmission as specified in TS 23.501 [7].
- For each PDU session for which the Redundant QoS Flow Indicator IE is include in QoS Flows To Be Setup List IE contained in the S-NODE addition request message, the S-NG-RAN node shall, if supported, store and use it as specified in TS 23.501 [7].
- For each PDU session, if the Redundant PDU Session Information IE is included in the PDU Session Resource Setup Info - SN terminated IE in the S-NODE addition request message, the S-NODE-RAN node shall, if supported, store the received information in the UE context and setup the redundant user plane resources for the concerned PDU session, as specified in TS 23.501 [7].
- For each PDU session resource successfully setup for which the Redundant PDU Session Information IE is included in the S-NODE addition request message, the S-NG-RAN node shall, if supported, include the Used RSN Information IE in the PDU Session Resource Setup Response Info - SN terminated IE in the S-NODE addition request acknowledge message. If the PDU Session Pair ID IE is included in the Redundant PDU Session Information IE, the S-NG-RAN node may store and use it to identify the paired PDU sessions.

If the S-NODE addition request message contains the Selected PLMN IE, the S-NG-RAN node may use it for RRM purposes.

If the S-NODE addition request message contains the Expected UE Behaviour IE, the S-NG-RAN node shall, if supported, store this information and may use it to optimize resource allocation.

If the S-NODE addition request message contains the Mobility Restriction List IE, the S-NG-RAN node, if supported, shall store this information and use it to select an appropriate SCG.

If the S-NODE addition request message contains the Index to RAT/Frequency Selection Priority IE, the S-NG-RAN node may use it for RRM purposes.

If the S-NG-RAN node is a gNB and the S-NODE addition request message contains the PCell ID IE, the S-NG-RAN node shall search for the target NR cell among the NR neighbour cells of the PCell indicated, as specified in the TS 37.340 [8].

If the S-NODE addition request message contains the S-NG-RAN node PDU Session Aggregate Maximum Bit Rate IE, the S-NG-RAN node may use it for RRM purposes.

If the S-NODE addition request message contains the MR-DC Resource Coordination Information IE, the S-NG-RAN node should forward it to lower layers and it may use it for the purpose of resource coordination with the M-NG-RAN node, or to coordinate with sidelink resources used in the M-NG-RAN node. The S-NG-RAN node shall consider the value of the received UL Coordination Information IE valid until reception of a new update of the IE for the same UE. The S-NG-RAN node shall consider the value of the received DL Coordination Information IE valid until reception of a new update of the IE for the same UE.

If the E-UTRA Coordination Assistance Information IE or the NR Coordination Assistance Information IE is contained in the MR-DC Resource Coordination Information IE, the S-NG-RAN node shall, if supported, use the information to determine further coordination of resource utilisation between the S-NG-RAN node and the M-NG-RAN node.

If the S-NODE addition request message contains the NE-DC TDM Pattern IE, the S-NG-RAN node should forward it to lower layers and use it for the purpose of single uplink transmission. The S-NG-RAN node shall consider the value of the received NE-DC TDM Pattern IE valid until reception of a new update of the IE for the same UE.

If the S-NODE addition request message contains the QoS Flow Mapping Indication IE, the S-NG-RAN node may take it into account that only the uplink or downlink QoS flow is mapped to the DRB.

For each bearer for which allocation of the PDCP entity is requested at the S-NG-RAN node:
- the M-NG-RAN node may propose to apply forwarding of downlink data by including the DL Forwarding IE within PDU Session Resource Setup Info - SN terminated IE of the S-NODE addition request message. For each bearer that it has decided to admit, the S-NG-RAN node may include the DL Forwarding GTP Tunnel Endpoint IE within the PDU Session Resource Setup Response Info - SN terminated IE of the S-NODE addition request acknowledge message to indicate that it accepts the proposed forwarding of downlink data for this bearer.
- the S-NG-RAN node may include for each bearer in the PDU Session Resource Setup Response Info - SN terminated IE the UL Forwarding GTP Tunnel Endpoint IE to indicates it request data forwarding of uplink packets to be performed for that bearer.
- the M-NG-RAN node shall include RLC Mode IE for each bearer offloaded from M-NG-RAN node to S-NG-RAN node in the DRBs to QoS Flow Mapping List IE within the PDU Session Resource Setup Info - SN terminated IE of the S-NODE addition request message, and the RLC Mode IE indicates the mode that the M-NG-RAN used for the DRB when it was hosted at the M-NG-RAN node.

For each bearer for which the PDCP entity is at the M-NG-RAN node:
- the M-NG-RAN node shall include the RLC mode IE for each bearer in the DRBs To Be Setup List IE within the PDU Session Resource Setup Info - MN terminated IE of the S-NODE addition request message to indicate the RLC mode has been configured at the M-NG-RAN node, so that the S-NG-RAN node shall configure the same RLC mode for this MN terminated split bearer.

The M-NG-RAN node may also propose to apply forwarding of UL data when offloading QoS flows for which in-order delivery is requested by including the UL Forwarding Proposal IE in the Data Forwarding and Offloading Info from source NG-RAN node IE within the PDU Session Resource Setup Info - SN terminated IE of the S-NODE addition request message. The S-NG-RAN node may include the PDU Session Level UL Data Forwarding UP TNL Information IE in the Data Forwarding Info from target NG-RAN node IE within the PDU Session Resource Setup Response Info - SN terminated IE of the S-NODE addition request acknowledge message to indicate that it accepts the proposed forwarding.

If the Masked IMEISV IE is contained in the S-NODE addition request message, the S-NG-RAN node shall, if supported, use it to determine the characteristics of the UE for subsequent handling.

If the UE Radio Capability ID IE is contained in the S-NODE addition request message, the S-NG-RAN node shall, if supported, store this information in the UE context and use it as defined in TS 23.501 [7] and TS 23.502 [13].

The S-NG-RAN node shall report to the M-NG-RAN node, in the S-NODE addition request acknowledge message, the result for all the requested PDU session resources in the following way:
- A list of PDU session resources which are successfully established shall be included in the PDU Session Resources Admitted To Be Added List IE.
- A list of PDU session resources which failed to be established shall be included in the PDU Session Resources Not Admitted List IE.

Upon reception of the S-NODE addition request acknowledge message, the M-NG-RAN node shall stop the timer TXn_{DCprep}.

If the S-NODE addition request acknowledge message contains the MR-DC Resource Coordination Information IE, the M-NG-RAN node may use it for the purpose of resource coordination with the S-NG-RAN node. The M-NG-RAN node shall consider the value of the received UL Coordination Information IE valid until reception of a new update of the IE for the same UE. The M-NG-RAN node shall consider the value of the received DL Coordination Information IE valid until reception of a new update of the IE for the same UE. If the E-UTRA Coordination Assistance Information IE or the NR Coordination Assistance Information IE is contained in the MR-DC Resource Coordination Information IE, the M-NG-RAN node shall, if supported, use the information to determine further coordination of resource utilisation between the M-NG-RAN node and the S-NG-RAN node.

The S-NG-RAN node may include for each bearer in the DRBs To Be Setup List IE in the S-NODE addition request acknowledge message the PDCP SN Length IE to indicate the PDCP SN length for that DRB.

If the S-NG-RAN node UE XnAP ID IE is contained in the S-NODE addition request message, the S-NG-RAN node shall, if supported, store this information and use it as defined in TS 37.340 [8].

If the S-NODE addition request message contains the PDCP SN Length IE, the S-NG-RAN node shall, if supported, store this information and use it for lower layer configuration of the concerned MN terminated bearer.

If the S-NODE addition request message contains the SN Addition Trigger Indication IE, the S-NG-RAN node shall include the RRC config indication IE in the S-NODE addition request acknowledge message to inform the M-NG-RAN node if the S-NG-RAN node applied full or delta configuration, as specified in TS 37.340 [8].

If the S-NODE addition request message contains the S-NG-RAN node Maximum Integrity Protected Data Rate Uplink IE or the S-NG-RAN node Maximum Integrity Protected Data Rate Downlink IE, the S-NG-RAN node shall use the received information when enforcing the maximum integrity protected data rate for the UE.

If the Security Indication IE is included in the PDU Session Resource Setup Info - SN terminated IE of the S-NODE addition request message, the behaviour of the S-NG-RAN node shall be the same as specified for the same IE in the PDU Session Resources To Be Setup List IE in the Handover Preparation procedure, for the concerned PDU session, and the S-NG-RAN node shall include the Security Result IE in the PDU Session Resource Setup Response Info - SN terminated IE.

If the Security Result IE is included in the PDU Session Resource Setup Info - SN terminated IE of the S-NODE addition request message,

the S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE.

The S-NG-RAN node may take the information into account when deciding whether to perform user plane integrity protection or ciphering for the DRBs that it establishes for the concerned PDU session, except if the Split Session Indicator IE is included in the PDU Session Resource Setup Info - SN terminated IE and set to "split", in which case it shall perform user plane integrity protection or ciphering according to the information in the Security Result IE. If the S-NG-RAN node is an ng-eNB, it shall reject all PDU sessions for which the Integrity Protection Indication IE is set to "required" as specified in TS 33.501 [28]. If either the S-NG-RAN node or the M-NG-RAN node is an ng-eNB, the S-NG-RAN node shall behave according to clause 6.10.4 of TS 33.501 [28] for PDU sessions for which the Integrity Protection Indication IE is set to "preferred".

The S-NG-RAN node may include the Location Information at S-NODE IE in the S-NODE addition request acknowledge message, if respective information is available at the S-NG-RAN node.

If the Location Information at S-NODE Reporting IE set to "pscell" is included in the S-NODE addition request, the S-NG-RAN node shall, start providing information about the current location of the UE. If the Location Information at S-NODE IE is included in the S-NODE addition request acknowledge, the M-NG-RAN node shall store the included information so that it may be transferred towards the AMF.

If the Default DRB Allowed IE is included in the PDU Session Resource Setup Info - SN terminated IE of the S-NODE addition request message and set to "true", the S-NG-RAN node may configure the default DRB for the PDU session.

If the S-NODE addition request acknowledge message includes the DRB IDs taken into use IE, the M-NG-RAN node, if applicable, shall act as specified in TS 37.340 [8].

If Trace Activation IE has previously been received for this UE, it shall be included in the S-NODE addition request message. If the Trace Activation IE is included in the S-NODE addition request message, the S-NG-RAN node shall, if supported, initiate the requested trace function as described in TS 32.422 [23].

If the Trace Activation IE is included in the S-NODE addition request message which includes
- the MDT Activation IE set to "Immediate MDT and Trace", then the S-NG-RAN node shall if supported, initiate the requested trace session and MDT session as described in TS 32.422 [23].
- the MDT Activation IE set to "Immediate MDT Only", the S-NG-RAN node shall, if supported, initiate the requested MDT session as described in TS 32.422 [23] and the S-NG-RAN node shall ignore the Interfaces To Trace IE, and the Trace Depth IE.
- the MDT Location Information IE, within the MDT Configuration IE, the S-NG-RAN node shall, if supported, store this information and take it into account in the requested MDT session.
- the MDT Activation IE set to "Immediate MDT Only", and if the Signaling based MDT PLMN List IE is included in the MDT Configuration IE, the S-NG-RAN node may use it to propagate the MDT Configuration as described in TS 37.320 [43].
- the Bluetooth Measurement Configuration IE, within the MDT Configuration IE, the S-NG-RAN node shall, if supported, take it into account for MDT Configuration as described in TS 37.320 [43].
- the WLAN Measurement Configuration IE, within the MDT Configuration IE, the S-NG-RAN node shall, if supported, take it into account for MDT Configuration as described in TS 37.320 [43].
- the Sensor Measurement Configuration IE, within the MDT Configuration IE, the S-NG-RAN node shall take it into account for MDT Configuration as described in TS 37.320 [43].
- the MDT Configuration IE and if the S-NG-RAN node is a gNB at least the MDT Configuration-NR IE shall be present, while if the S-NG-RAN Node is an ng-eNB at least the MDT Configuration-EUTRA IE shall be present.

If the Requested Fast MCG recovery via SRB3 IE set to "true" is included in the S-NODE addition request message and the S-NG-RAN node decides to configure fast MCG link recovery via SRB3 as specified in TS 37.340 [8], the S-NG-RAN node shall, if supported, include the Available fast MCG recovery via SRB3 IE set to "true" in the S-NODE addition request acknowledge message.

If the QoS Monitoring Request IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it to configure lower layers for the purpose of delay measurement and QoS monitoring as specified in TS 23.501 [7]. If the QoS Monitoring Reporting Frequency IE is included in the QoS Flow Level QoS Parameters IE for a QoS flow contained in the DRBs To Be Setup List IE of the PDU Session Resource Setup Info - MN terminated IE, the S-NG-RAN node shall, if supported, use it for RAN part delay reporting.

For each QoS flow which has been successfully established in the S-NG-RAN node, if the QoS Monitoring Request IE was included in the QoS Flow Level QoS Parameters IE contained in the PDU Session Resource Setup Info - SN terminated IE, the S-NG-RAN node shall store this information, and shall, if supported, perform delay measurement and QoS monitoring as specified in TS 23.501 [7]. If the QoS Monitoring Reporting Frequency IE was included in the QoS Flow Level QoS Parameters IE contained in the PDU Session Resource Setup Info - SN terminated IE, the S-NG-RAN node shall store this information, and shall, if supported, use it for RAN part delay reporting. In case such a QoS flow is included in the DRBs To Be Setup List IE of the PDU Session Resource Setup Response Info - SN terminated IE, the M-NG-RAN node shall, if supported, use it to configure lower layers for the purpose of delay measurement and QoS monitoring. If the QoS Monitoring Reporting Frequency IE is included in the DRBs To Be Setup List IE of the PDU Session Resource Setup Response Info - SN terminated IE, the M-NG-RAN node shall, if supported, use it for RAN part delay reporting.

For each DRB configured as MN-terminated split bearer/SCG bearer, if the QoS Mapping Information IE is included in the DRBs Admitted List IE in the PDU Session Resource Setup Response Info - MN terminated IE of the S-NODE addition request acknowledge message, the M-NG-RAN node shall, if supported, use it to set DSCP and/or IPv6 flow label fields for the downlink IP packets which are transmitted from M-NG-RAN node to S-NG-RAN node through the GTP tunnels indicated by the UP Transport Layer Information IE.

If the Source NG-RAN Node ID IE is included in the S-NODE addition request message, the S-NG-RAN node shall, if supported, use it to decide the direct data path availability with the indicated source NG-RAN node, and if the direct data forwarding path is available, include the Direct Forwarding Path Availability IE in the S-NODE addition request acknowledge message.

If for a given QoS Flow the Source DL Forwarding IP Address IE or both, the Source DL Forwarding IP Address IE and the Source Node DL Forwarding IP Address IE are included within the Data Forwarding and Offloading Info from source NG-RAN node IE in the PDU Session Resource Setup Info - SN terminated IE contained in the S-NODE addition request message, the S-NG-RAN node shall, if supported, store this information and use it as part of its ACL functionality configuration actions, if such ACL functionality is deployed.

If for a given QoS Flow the Source DL Forwarding IP Address IE is included within the QoS Flows Mapped To DRB List IE in the PDU Session Resource Setup Response Info - SN terminated IE contained in the S-NODE addition request acknowledge message, the M-NG-RAN node shall, if supported, store this information and use it as part of its ACL functionality to identify source TNL address for data forwarding in case of subsequent handover preparation, if such ACL functionality is deployed.

If the Management Based MDT PLMN List IE is contained in the S-NODE addition request message, the S-NG-RAN node shall, if supported, store the received information in the UE context, and use this information to allow subsequent selection of the UE for management based MDT defined in TS 32.422 [23].

Upon reception of the S-NODE addition request message, the S-NG-RAN node shall, if supported, start collecting SCG information and continue for as long as the UE stays in one of its cells.

If the UE History Information from the UE IE is included in the S-NODE addition request message, the S-NG-RAN node shall, if supported, store this information.

If the PSCell Change History IE set to "reporting full history" is included in the S-NODE addition request message, the S-NG-RAN node shall, if supported, signal the latest SCG UE History Information upon each PSCell change, to the M-NG-RAN node, using the S-NG-RAN node initiated S-NG-RAN node Modification procedure.

If the IAB Node Indication IE is contained in the S-NODE addition request message, the S-NG-RAN node shall, if supported, consider that dual connectivity operation is requested for an IAB-node. In addition:
- If the No PDU Session Indication IE is contained in the S-NODE addition request message, the S-NG-RAN node shall, if supported, consider the UE as an IAB-node which does not have any PDU sessions activated, and ignore the PDU Session Resources To Be Added List IE, and shall not take any action with respect to PDU session setup. Subsequently, the M-NG-RAN node shall, if supported, ignore the PDU Session Resources Admitted To Be Added List IE in the S-NODE addition request acknowledge message.
- If the F1-terminating IAB-donor Indicator IE is contained in the S-NODE addition request message, the S-NG-RAN node shall, if supported, assume that it will become the F1-terminating IAB-donor of the IAB-node, and act as described in TS 38.401 [2].

If the CHO Information SN Addition IE is included in the S-NODE addition request message, the S-NG-RAN node shall consider that the S-NG-RAN node addition preparation procedure has been triggered as part of a conditional handover. It may use the Source M-NG-RAN node ID IE and the Source M-NG-RAN node UE XnAP ID IE to identify other active S-NG-RAN node addition preparations related to this UE. If the Estimated Arrival Probability IE is contained in the CHO Information SN Addition IE included in the S-NODE addition request message, then the S-NG-RAN node may use the information to allocate necessary resources for the UE.

If the SCG Activation Request IE is included in the S-NODE addition request message, the S-NG-RAN node may use it to configure SCG resources as specified in TS 37.340 [8], and shall, if supported, include the SCG Activation Status IE in the S-NODE addition request acknowledge message. If the SCG Activation Request IE in the S-NODE addition request message is set to "Activate SCG", the S-NG-RAN node shall, if supported, activate the SCG resources and set the SCG Activation Status IE in the S-NODE addition request acknowledge message to "SCG activated".

If the Conditional PSCell Addition Information Request IE is included in the S-NODE addition request message, the S-NG-RAN node shall, if supported, consider that the request concerns CPAC, as described in TS 37.340 [8]. Accordingly, the S-NG-RAN node shall, if supported, include the Conditional PSCell Addition Acknowledge IE in the S-NODE addition request acknowledge message.

If the Conditional PSCell Addition Information Acknowledge is included in the S-NODE addition request acknowledge message, the M-NG-RAN node shall, if supported, shall, if supported, consider the indicated PSCells are selected by the target SN as candidate PSCells for CPAC.

If the CG-CandidateList is included in the S-NG-RAN node to M-NG-RAN node Container IE in the S-NODE addition request acknowledge message, the M-NG-RAN node shall, if supported, use it for the purpose of CPAC.

If the Estimated Arrival Probability IE is contained in the Conditional PSCell Addition Information Request IE included in the S-NODE addition request message, then the candidate target S-NG-RAN node may use the information to allocate necessary resources for the incoming CPAC procedure.

If the S-NG-RAN node UE Slice Maximum Bit Rate IE for a specific S-NSSAI is included in the S-NODE addition request message, the S-NG-RAN node shall, if supported, store and use the received S-NG-RAN node UE Slice Maximum Bit Rate for all PDU sessions associated with the S-NSSAI for the concerned UE as defined in TS 23.501 [7].

### Interactions with the S-NG-RAN node Reconfiguration Completion procedure:

If the S-NG-RAN node admits at least one PDU session resource, the S-NG-RAN node shall start the timer TXn when sending the S-NODE addition request acknowledge message to the M-NG-RAN node except for a CPAC request. The reception of the S-NODE reconfiguration complete message shall stop the timer TXn_{DCoverall} if TXn_{DCoverall} is running.

### Interaction with the Activity Notification procedure

Upon receiving an S-NODE addition request message containing the Desired Activity Notification Level IE, the S-NG-RAN node shall, if supported, use this information to decide whether to trigger subsequent Activation Notification procedures according to the requested notification level.

### 8.3.1.3 Unsuccessful operation

If the S-NG-RAN node is not able to accept any of the bearers or a failure occurs during the S-NG-RAN node addition preparation, the S-NG-RAN node sends the S-NODE addition request reject message with an appropriate cause value to the M-NG-RAN node.

### 8.3.1.4 Abnormal conditions

If the S-NG-RAN node receives an S-NODE addition request message containing in a PDU Session Resource To Be Added Item IE neither the PDU Session Resource Setup Info - SN terminated IE nor the PDU Session Resource Setup Info - MN terminated IE, the S-NG-RAN node shall fail the S-NG-RAN node addition preparation procedure indicating an appropriate cause.

If the supported algorithms for encryption defined in the NR Encryption Algorithms IE in the NR UE Security Capabilities IE, plus the mandated support of NEA0 in all UEs (TS 33.501 [28]), do not match any algorithms defined in the configured list of allowed encryption algorithms in the S-NG-RAN node (TS 33.501 [28]), the S-NG-RAN node shall reject the procedure using the S-NODE addition request reject message.

If the supported algorithms for integrity defined in the NR Integrity Protection Algorithms IE in the NR UE Security Capabilities IE do not match any algorithms defined in the configured list of allowed integrity protection algorithms in the S-NG-RAN node (TS 33.501 [28]), the S-NG-RAN node shall reject the procedure using the S-NODE addition request reject message.

If the S-NG-RAN node receives an S-NODE addition request message containing a S-NG-RAN node UE XnAP ID IE that does not match any existing UE Context that has such ID, the S-NG-RAN node shall reject the procedure using the S-NODE addition request reject message.

If the M-NG-RAN node receives an S-NODE addition request acknowledge message containing a value for PDU Session ID in PDU Session Resources Admitted List IE and in PDU Session Resources Not Admitted List IE, the M-NG-RAN node shall regard setup of S-NG-RAN node resources of that PDU Session as being failed.

If the S-NG-RAN node receives an S-NODE addition request message containing, for a PDU session, a PDU Session Resource Setup Info - SN terminated IE for which the Split Session Indicator IE is included and set to "split", the Security Result IE is not included, and either the Integrity Protection Indication IE or the Confidentiality Protection Indication IE is set to "preferred", it shall reject the PDU session.

### Interaction with the M-NG-RAN node initiated S-NG-RAN node Release procedure:

If the M-NG-RAN node receives an S-NODE ADDITION REQUEST ACKNOWLEDGE message containing in a PDU Session Resource Admitted To Be Added Item IE neither the PDU Session Resource Setup Response Info - SN terminated IE nor the PDU Session Resource Setup Response Info - MN terminated IE, the M-NG-RAN node shall trigger the M-NG-RAN node initiated S-NG-RAN node Release procedure indicating an appropriate cause.

If the timer TXn_{DCprep} expires before the M-NG-RAN node has received the S-NODE addition request acknowledge message, the M-NG-RAN node shall regard the S-NG-RAN node Addition Preparation procedure as being failed and shall trigger the M-NG-RAN node initiated S-NG-RAN node Release procedure.

### Interactions with the S-NG-RAN node Reconfiguration Completion and S-NG-RAN node initiated S-NG-RAN node release procedure:

If the timer TXn_{DCoverall} expires before the S-NG-RAN node has received the S-NODE reconfiguration complete or the S-NODE release request message, the S-NG-RAN node shall regard the requested RRC connection reconfiguration as being not applied by the UE and shall trigger the S-NG-RAN node initiated S-NG-RAN node release procedure.

### Specific Embodiments of the Present Disclosure

The present disclosure relates to an apparatus and method for transmitting small data in a wireless communication system. Specifically, the present disclosure relates to an apparatus and method for supporting small data transmission (SDT) for a terminal configured to have dual connectivity in a wireless communication system using secondary cell group (SCG).

In 5G, NR inactive is designed so that UE suspends access stratum (AS) operations while maintaining connected state to core network (CN). Therefore, AS and data transmission may be immediately resumed without RRC connection reconfiguration. This was introduced as light approach to RRC idle and/or CN idle state to reduce connection delay and battery consumption.

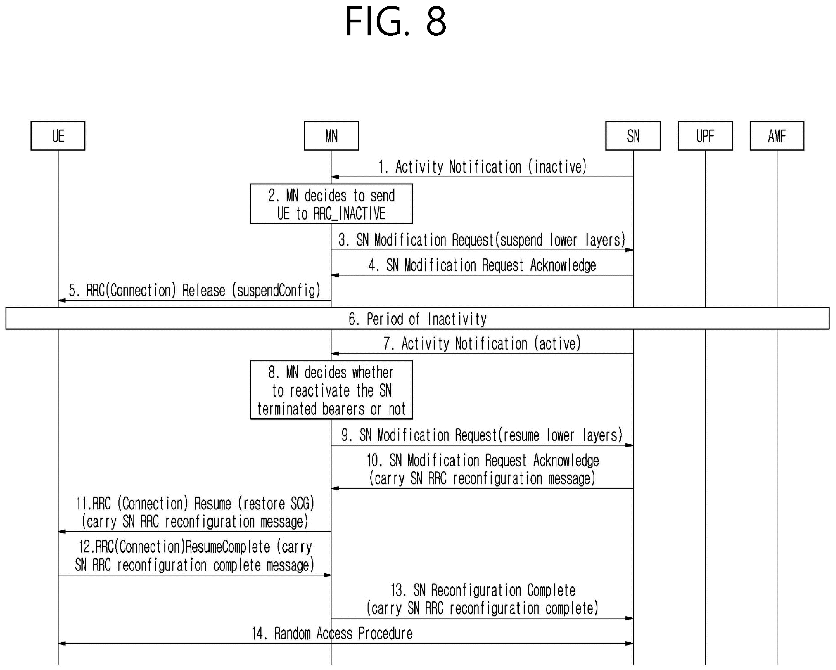

Inactive concept may be extended to multi-radio dual connectivity (MR-DC) that can suspend and resume both master cell group (MCG) and secondary cell group (SCG). Exemplary flow for MR-DC using 5GC is shown in FIG. 8. FIG. 8 illustrates an example of a procedure supporting an activity notification of MR-DC. This is identical to Figure 10.12.2-3 defined in clause 10.12.2 of TS 37.340 specification document.

Main intention of MR-DC activity notification support procedure as shown in FIG. 8 is to support UE without mobility requiring infrequent but burst data transmission using network. Although not explicitly shown in FIG. 8, after step 7, master node (MN) triggers UE to start connection resumption by transmitting paging signal to UE according to clause 9.2.2.4.2 of TS 38.300. Afterwards, subsequent steps for MCG and/or SCG resumption may be performed.

Meanwhile, in Rel-17 and Rel-18, SDT was designed to allow small data transmission while maintaining inactive state. For example, Rel-17 and Rel-18 were designed to enable support of SDT without fully resuming RRC connection of terminal. Mobile-originated (MO) SDT was defined in Rel-17, and MO SDT procedure starts when SDT-capable UE transmits resume request to network. Also, MO SDT terminates when UE is directed to RRC idle or inactive state through RRC Release, or directed to connected state through RRC resume or RRC setup. Initial UL SDT data or signal is multiplexed using resume request message, and multiple UL/DL SDT data exchanges may occur during SDT session. Mobile-terminated (MT) SDT was defined in Rel-18, and MT SDT may be started when network transmits paging message to UE upon arrival of DL SDT data or signal.

Given such recent studies, SDT may be extended to DC in the future. When SDT is not supported in eNB using EPC or ng-eNB using 5GC, SDT may be extended only to E-UTRA-NR dual connectivity (EN-DC) or NR-NR Dual Connectivity (NR-DC). Currently, research on network mechanisms supporting SDT operations using SCG is still in early stages. Accordingly, UE configured to have dual connectivity needs to release SCG when SDT starts.

Therefore, the present disclosure proposes mechanisms supporting dual connectivity and SDT together. In other words, the present disclosure proposes various embodiments supporting SDT through SCG without forcibly releasing SCG of UE configured to have dual connectivity.

### Embodiment #1: Supporting DL SDT Data Arrival at SN

When it is decided to transition UE's state to inactive state, master node (MN) may request secondary node (SN) to suspend lower layer. SN may be configured or pre-configured based on at least one of information indicating whether UE supports SCG SDT or bearer information for SDT. Bearer for SDT may be determined and/or configured by SN.

SN may provide some configuration information related to suspension of SN to MN. MN may configure or pre-configure threshold for SDT data volume and provide threshold for SDT data volume to SN. This is so that SN can notify MN when DL and/or UL SDT user data received at SN through SCG exceeds threshold that SDT user data has exceeded threshold. Threshold for SDT data volume may be configured differently for UL and DL. For example, threshold for UL SDT user data volume and threshold for DL SDT user data volume may be different. Threshold for UL and/or DL SDT data volume may be used for MN to determine whether to fully resume UE. If SN cannot support SCG SDT for UE, SN may reject MN's request using dedicated cause value.

When DL SDT user data arrives at SN, SN notifies MN of arrival of DL SDT user data. At this time, notification includes assistance information helping MN determine whether to trigger legacy paging or MT-SDT paging. For example, assistance information may include DL SDT data volume information. RAN paging message may include indication of whether DL SDT data has arrived at SCG.

UE that received RAN paging message initiates resume request. When RAN paging message is paging message for SDT, UE may transmit resume request message including UL SDT data or signaling. When RAN paging message indicates DL SDT data arrival at SCG, UE may check timing alignment with resumed primary SCG cell (PSCell) and perform RACH procedure as needed. Resume request message may include information about whether resumed SCG is synchronized. UE may be configured to transmit SCG cell measurement result using resume request message. Also, UE may indicate whether there is pending UL SDT data to be transmitted through SCG to help MN decide to resume SN.

When MN decides to maintain same SN, MN requests that SN to resume only bearer for SDT.

When UL SDT user data and/or DL SDT user data larger than SDT data volume threshold configured by MN arrives, SN may inform MN that UL SDT user data and/or DL SDT user data larger than configured threshold has arrived.

In situation where DL SDT user data or signaling has arrived at MN, when MN decides SDT paging, MN may request SN to resume bearer for SDT. At this time, SN stops notifying MN that DL SDT user data has arrived at SN.

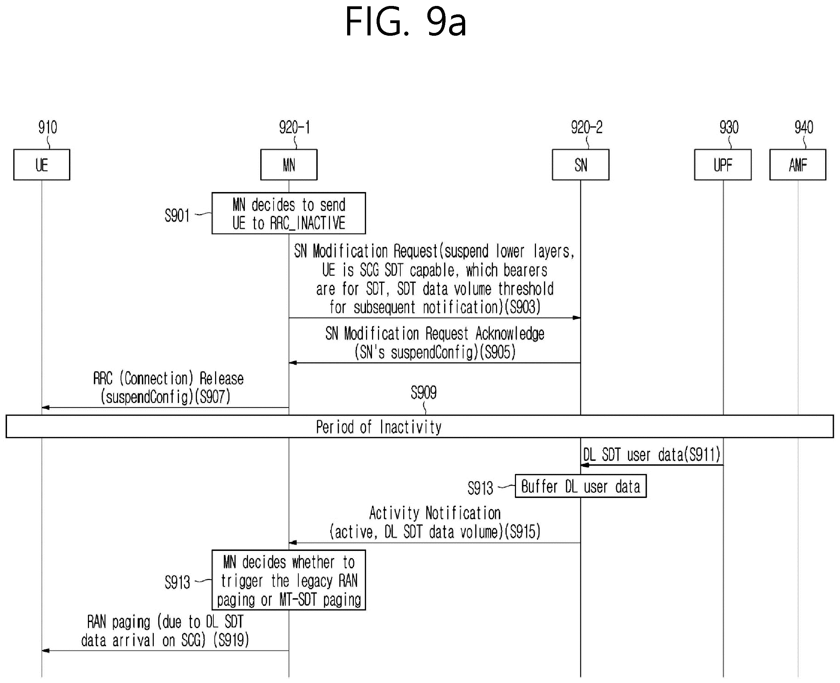

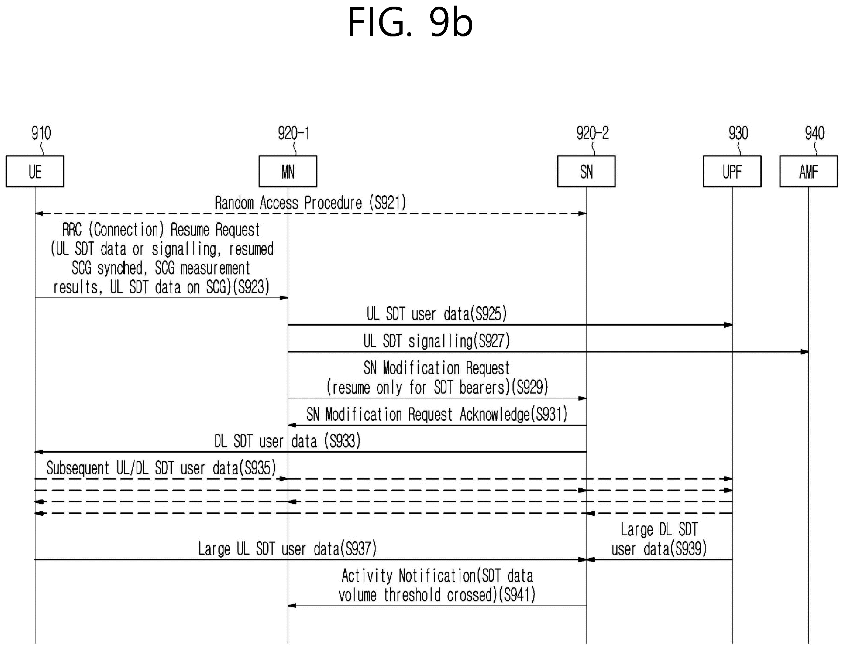

FIG. 9a and FIG. 9b illustrate an example of a procedure supporting A DL SDT data arrival at A SN according to an embodiment of the present disclosure. FIGS. 9a and 9b are described assuming that MN has decided to transition SCG SDT capable UE to inactive state while suspending lower layer for SDT operation at SN side. SCG SDT capable UE means UE supporting SDT through SCG of SN.

Referring to FIGS. 9a and 9b, in step S901, MN 920-1 decides to send SCG SDT capable UE to inactive state. That is, MN 920-1 may decide to transition UE supporting SDT through SCG to inactive state.

In step S903, MN 920-1 transmits SN modification request message to SN 920-2. SN modification request message may include at least one of information requesting suspension of lower layer, information indicating whether UE is SCG SDT capable, bearer information for SDT, or SDT data volume threshold for subsequent notification. For example, MN 920-1 may request SN to suspend lower layer (e.g., SCG lower layer) of SN for terminal using SN modification request message. Also, MN 920-1 may configure SN so that UE 910 is capable of performing SCG SDT and/or bearer established at SN 920-2 is subject to SDT operations. Also, MN 920-1 may configure SDT data volume threshold to SN. By configuring SDT data volume threshold to SN 920-2, when volume of DL SDT user data and/or UL SDT user data received through SCG exceeds the threshold, MN 920-1 may have SN 920-2 notify MN 920-1 of this. SDT data volume threshold may be configured to different values for DL SDT user data and UL SDT user data respectively. That is, SDT data volume threshold for DL SDT user data and SDT data volume threshold for UL SDT user data may be different. SDT data volume threshold may be used for MN 920-1 to determine whether to fully resume UE.

In step S905, SN 920-2 transmits SN modification request acknowledge message to MN 920-1. That is, SN 920-2 may suspend lower layer for UE and transmit SN modification request acknowledge message including suspend configuration information of SN for UE to MN. Suspend configuration information of SN may include configuration information related to suspension of SCG managed by SN. For example, suspend configuration information of SN may include at least one of configuration information needed to transition RRC connection state of UE for SN to inactive state or configuration information needed when transitioning back from inactive state to connection resume state. When SN 920-2 cannot support SCG SDT for UE, SN 920-2 may reject MN 920-1's request using dedicated cause value. In other words, when SN 920-2 cannot support SCG SDT for UE, SN modification request acknowledge message may include cause value indicating that SN 920-2 cannot support SCG SDT for UE.

In step S907, MN 920-1 transmits RRC release message to UE 910. RRC release message may be RRC connection release message. RRC release message may include suspend configuration information. Suspend configuration information may include at least one of suspend configuration information of MN or suspend configuration information of SN obtained from SN 920-2. Suspend configuration information of MN may include at least one of necessary configuration information to transition RRC connection state of UE 910 for MN 920-1 to inactive state or MCG or SCG related configuration information needed when transitioning back from inactive state to connection resume state.

In step S909, UE 910 operates in inactive state during period of inactivity. UE 910 that received RRC release message may be released to inactive state based on suspend configuration information included in RRC release message.

In step S911, SN 920-2 receives DL SDT user data. That is, SN 920-2 may receive DL SDT user data from UPF 930 while lower layer of SN is suspended and terminal 910 is in inactive state. As DL SDT user data is received from UPF 930, PSCell of SN 920-2 may be resumed.

In step S913, SN 920-2 stores DL SDT user data in buffer, and in step S915 transmits activity notification message indicating existence of DL SDT user data to MN 920-1. Activity notification may include information about volume of received DL SDT data. Also, activity notification may include activity information for UE. Activity information may indicate that user plane activity has been detected within SCG resource managed by SN 920-2.

In step S917, MN 920-1 determines whether to trigger legacy RAN paging or SDT paging. MN 920-1 may determine whether to trigger legacy RAN paging or SDT paging based on information about received DL SDT data volume included in activity notification. For example, when received DL SDT data volume is less than or equal to DL SDT data volume threshold, MN 920-1 may decide SDT paging. On the other hand, when received DL SDT data volume is greater than DL SDT data volume threshold, MN 920-1 may decide legacy RAN paging instead of deciding SDT paging. Embodiment of FIGS. 9a and 9b is described assuming that SDT paging is decided.

In step S919, RAN paging is performed through RAN notification area (RNA). MN 920-1 transmits RAN paging message to UE 910. RAN paging message may include information indicating that it is SDT paging due to DL SDT data arrival for SCG.

In step S921, UE 910 performs random access procedure for SN 920-2. When received RAN paging message indicates DL SDT data arrival for SCG, UE 910 may check timing alignment with resumed PSCell and perform RACH if necessary. Resumed PSCell may be cell of SCG where DL SDT data has arrived.

In step S923, UE 910 transmits RRC resume request message. RRC resume request message may be RRC connection resume request message. RRC resume request message may include UL SDT data or signaling for MCG. RRC resume request message may include at least one of information indicating whether synchronized to resumed SCG, SCG cell measurement result, or information indicating whether UL SDT data through SCG is pending. Such information may be used for MN 920-1 to determine whether to resume SN.

In step S925, MN 920-1 transmits received UL SDT user data to UPF 930, and in step S927, MN 920-1 transmits received UL SDT signal to AMF 940. That is, MN 920-1 transmits UL SDT user data for MCG and signaling included in RRC resume request message to UPF 930 and AMF 940 respectively.

In step S929, MN 920-1 transmits SN modification request message to SN 920-2. SN modification request message may request to resume only bearer for SDT. Here, MN 920-1 may determine whether to change SN and decide to maintain that SN without changing to another SN.

In step S931, SN 920-2 transmits SN modification request acknowledge message to MN 920-1. SN 920-2 may transmit SN modification request acknowledge message to MN 920-1 as response to SN modification request message after resuming bearer for SDT. Here, bearer for SDT may be bearer configured by MN or SN. For example, SN 920-2 may resume bearer configured based on bearer information for SDT received from MN or bearer configured by SN 920-2 as SDT bearer.

In step S933, SN 920-2 transmits buffered DL SDT user data to UE 910. In step S935, subsequent UL SDT user data and/or DL SDT user data are transmitted and received among UE 910, MN 920-1 and/or SN 920-2. That is, UE 910 may transmit subsequent UL SDT user data to MN 920-1 and/or SN 920-2, and MN 920-1 and/or SN 920-2 may transmit subsequent DL SDT user data to UE 910.

In step S937, UL SDT user data larger than UL SDT data volume threshold configured at SN 920-2 may arrive, or in step S939, DL SDT user data larger than DL SDT data volume threshold configured at SN 920-2 may arrive. In this case, in step S941, SN 920-2 may transmit activity notification message indicating that UL SDT user data and/or DL SDT user data larger than threshold has arrived to MN 921-1.

In embodiment described with reference to FIGS. 9a and 9b, MN configured at least one of whether UE is SCG SDT capable, bearer information for SDT, or SDT data volume threshold to SN using SN modification request message. However, at least one of whether UE is SCG SDT capable, bearer information for SDT, or SDT data volume threshold may be configured before step S903 (e.g., at time of SN addition). Or, bearer for SDT may be determined by SN.

In embodiment described with reference to FIGS. 9a and 9b, case where DL SDT user data or signaling arrives at SN was described, but DL SDT user data or signaling may arrive at MN. In this case, MN may decide SDT paging and request SN to resume bearer for SDT at time earlier than step S929. At this time, SN may stop operation of notifying MN that DL SDT user data has arrived at SN.

### Embodiment #2: Supporting SN Change During SDT

Embodiment #2 is variant embodiment of Embodiment #1, where MN changes SN for SDT of UE. In Embodiment #2, when SDT resume request is received from UE, MN may decide to change SN and perform UE reconfiguration based on changed SN.

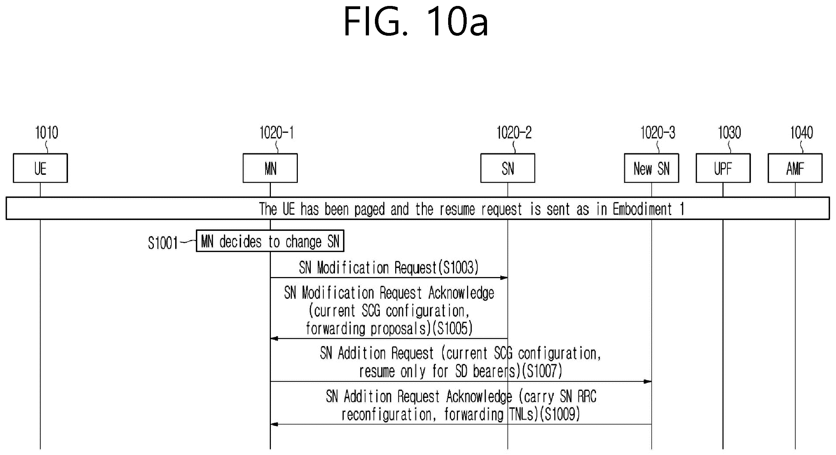

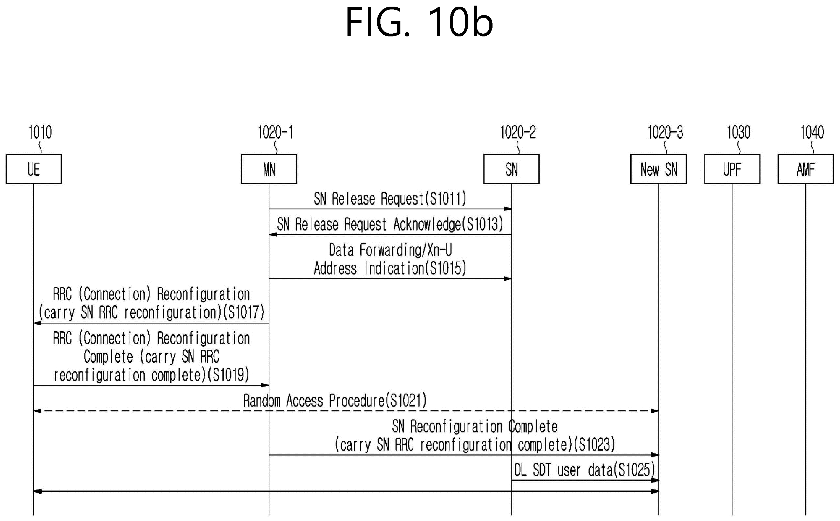

FIG. 10a and FIG. 10b illustrate an example of procedure for changing SN during SDT according to an embodiment of the present disclosure. FIGS. 10a and 10b show operations after UE 1010 is paged and transmits RRC resume request as in Embodiment #1. In other words, procedure of FIGS. 10a and 10b below may be performed after steps S901 to S923 of FIGS. 9a and 9b are performed.

Referring to FIGS. 10a and 10b, in step S1001, MN 1020-1 decides SN change. MN 1020-1 receives RRC resume request message for SDT from UE 1010 and decides whether to change or maintain SN for UE 1010 based on information included in RRC resume request message (e.g., whether UE is synchronized to resumed SCG, SCG cell measurement result reported by UE, etc.). For example, MN 1020-1 may decide whether to change SN for UE 1010 to new SN or maintain SN for UE 1010 for SDT of UE 1010 based on at least some information included in RRC resume request message.

In step S1003, MN 1020-1 transmits SN modification request message to SN 1020-2. MN 1020-1 may request current SCG configuration or forwarding proposals information by transmitting SN modification request message to SN 1020-2.

In step S1005, SN 1020-2 transmits SN modification request acknowledge message to MN 1020-1 as response to SN modification request message. SN modification request acknowledge message may include current SCG configuration or forwarding proposal information.

In step S1007, MN 1020-1 transmits SN addition request message to new SN 1020-3. That is, MN 1020-1 transmits SN addition request message to new SN 1020-3 to change SN of UE 1010. SN addition request message may include at least one of current SCG configuration information or information requesting to resume only bearer for SDT. For example, MN 1020-1 may request new SN 1020-3 so that only bearer for SDT is resumed and non-SDT bearers are suspended while establishing new SN.

In step S1009, new SN 1020-3 transmits SN addition request acknowledge message to MN 1020-1. SN addition request acknowledge message may include SN RRC reconfiguration and forwarding transport network layer addresses (TNLs) information. Forwarding TNLs information may include TNLs information for data forwarding between SN 1020-2 and new SN 1020-3. When new SN 1020-3 cannot support SCG SDT for UE 1010, new SN 1020-3 may reject MN's request using dedicated cause value.

In step S1011, MN 1020-1 transmits SN release request message to SN 1020-2, and in step S1013, SN 1020-2 transmits SN release request acknowledge message to MN 1020-1 as response to SN release request message. In step S1015, MN 1020-1 provides data forwarding and/or Xn-U address indication information to SN 1020-2. MN 1020-1 may deliver TNLs information received from new SN 1020-3 to SN 1020-2 for data forwarding between SN 1020-2 and new SN 1020-3.

In step S1017, MN 1020-1 transmits RRC reconfiguration message to UE 1010. RRC reconfiguration message may be RRC connection reconfiguration message. RRC reconfiguration message may include SN RRC reconfiguration information.

In step S1019, UE 1010 transmits RRC reconfiguration complete message to MN 1020-1, and in step S1021, UE 1010 performs random access procedure for new SN 1020-3. RRC reconfiguration complete message may be RRC connection reconfiguration complete message and may include information indicating SN RRC reconfiguration complete. UE 1010 may perform configuration for new SN based on SN RRC reconfiguration information included in RRC reconfiguration message and then transmit RRC reconfiguration complete message to MN 1020-1.

In step S1023, MN 1020-1 delivers SN RRC reconfiguration complete message received from UE 1010 to new SN 1020-3.

In step S1025, SN 1020-2 delivers DL SDT user data to new SN 1020-3, and new SN 1020-3 delivers DL SDT to UE 1010.

In embodiment described with reference to FIGS. 10a and 10b, description of path switch procedure with AMF 1040 was omitted for brief description, but path switch procedure should be performed from MN 1020-1 after step S1023. That is, path switch procedure may be performed after step S1023, and then step S1025 may be performed.

### Embodiment #3: Supporting DL non-SDT Data Arrival at SN

Embodiment #3 is variant embodiment of Embodiment #1, where SN notifies MN that DL non-SDT user data has arrived. In Embodiment #3, when DL non-SDT user data arrives at SN, SN notifies MN that DL non-SDT user data has arrived, and MN decides to terminate SDT operation based on this. In this case, UE and SN are fully resumed.

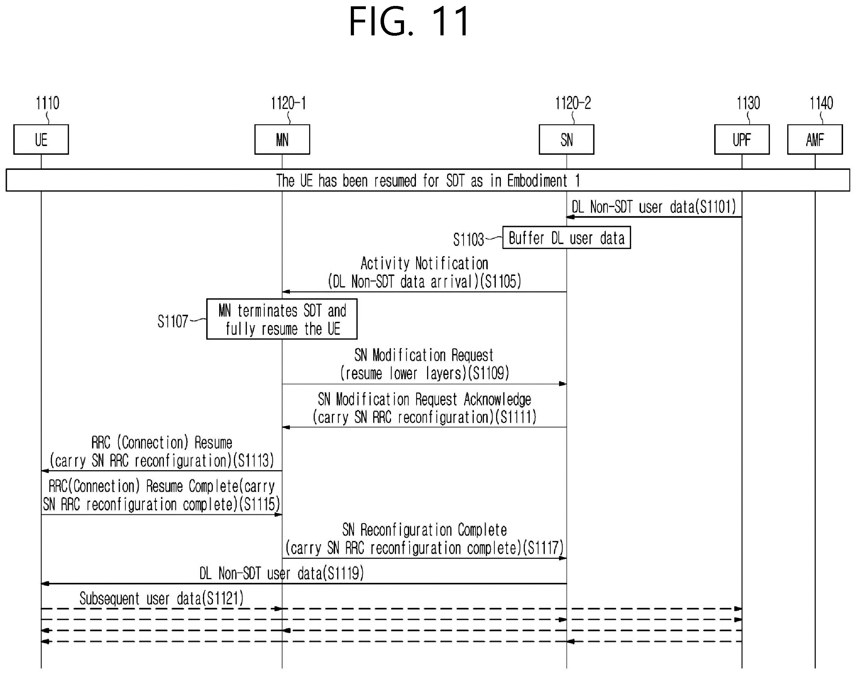

FIG. 11 illustrates an example of a procedure supporting a DL Non-SDT at SN according to an embodiment of the present disclosure. FIG. 11 assumes situation where UE is resumed for SDT as in Embodiment #1. In other words, procedure of FIG. 11 below may be performed after steps S901 to S931 of FIGS. 9a and 9b are performed.

Referring to FIG. 11, in step S1101, SN 1120-2 receives DL non-SDT user data. SN 1120-2 may receive DL non-SDT user data in state where UE 1110 is resumed for SDT or in state where SDT user data is being delivered to UE 1110.

In step S1103, SN 1120-2 stores DL non-SDT user data in buffer, and in step S1105 transmits activity notification message indicating existence of DL non-SDT user data to MN 1120-1. Activity notification may include information indicating that DL non-SDT data has been received.

In step S1107, MN 1120-1 decides SDT termination and full resumption of UE. MN 1120-1 may decide SDT termination and full resumption of UE based on information included in activity notification, for example, information indicating that DL non-SDT user data has arrived.

In step S1109, MN 1120-1 transmits SN modification request message to SN 1120-2. SN modification request message may include information indicating lower layer resumption of SN.

In step S1111, SN 1120-2 transmits SN modification request acknowledge message to MN 1120-1. SN modification request acknowledge message may include SN RRC reconfiguration information.

In step S1113, MN 1120-1 transmits RRC resume message. RRC resume message may be RRC connection resume message and may include SN RRC reconfiguration information. In step S1115, UE 1110 transmits RRC resume complete message to MN 1120-1. RRC resume complete message may include information indicating SN RRC reconfiguration complete. Accordingly, UE 1110 may be fully resumed.

In step S1117, MN 1120-1 delivers SN RRC reconfiguration complete message received from UE 1110 to SN 1120-2.

In step S1119, SN 1120-2 delivers DL non-SDT user data to UE 1110. When SN RRC reconfiguration complete message is received, SN 1120-2 may recognize that UE 1110 is fully resumed and deliver DL non-SDT user data to UE 1110.

In step S1121, subsequent UL user data and/or DL user data are transmitted and received among UE 1110, MN 1120-1 and/or SN 1120-2. That is, UE 1110 may transmit subsequent UL user data to MN 1120-1 and/or SN 1120-2, and MN 1120-1 and/or SN 1120-2 may transmit subsequent DL user data to UE 1110.

Embodiment described with reference to FIG. 11 described case where DL non-SDT user data arrives at SN in state where UE is resumed for SDT. However, DL non-SDT user data or signaling may arrive at MN in state where UE is resumed for SDT. In this case, MN may decide SDT operation termination, and step S1109 and subsequent steps may be performed.

### Embodiment #4: Supporting SN Change Upon DL non-SDT Data Arrival at SN

Embodiment #4 is variant embodiment of Embodiments #2 and #3, where MN changes SN for DL non-SDT of UE and reconfigures UE based on changed SN. In Embodiment #4, when DL non-SDT user data arrives at SN, MN may decide SDT operation termination and SN change. Embodiment #4 described below may also be applied when DL non-SDT user data arrives at MN.

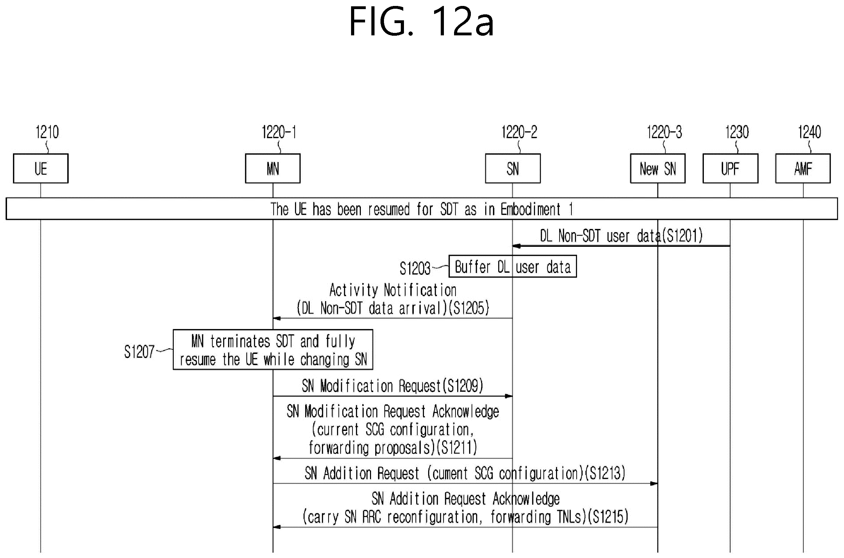

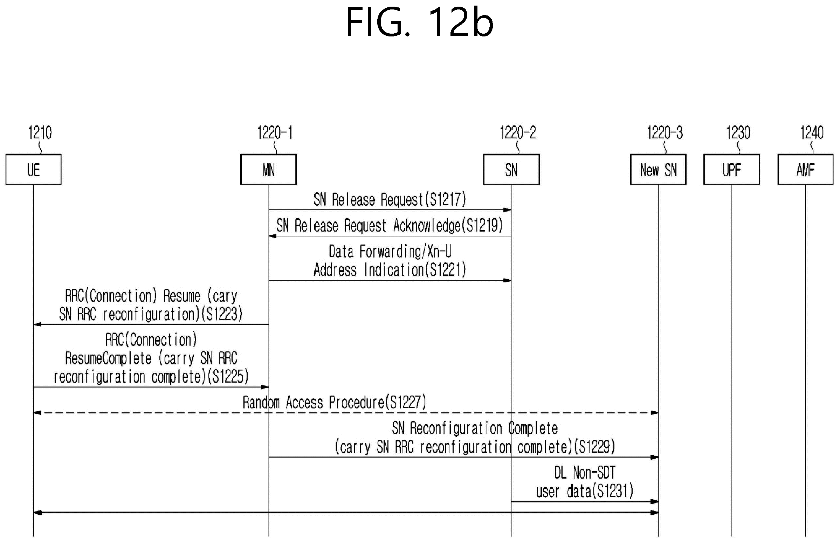

FIG. 12a and FIG. 12b illustrate an example of a procedure for changing SN for DL Non-SDT at SN according to an embodiment of the present disclosure. FIGS. 12a and 12b assume situation where UE is resumed for SDT as in Embodiment #1. In other words, procedure of FIGS. 12a and 12b below may be performed after steps S901 to S931 of FIGS. 9a and 9b are performed.

Referring to FIGS. 12a and 12b, in step S1201, SN 1220-2 receives DL non-SDT user data. SN 1220-2 may receive DL non-SDT user data in state where UE 1210 is resumed for SDT or in state where SDT user data is being delivered to UE 1210.

In step S1203, SN 1220-2 stores DL non-SDT user data in buffer, and in step S1205 transmits activity notification message indicating existence of DL non-SDT user data to MN 1220-1. Activity notification may include information indicating that DL non-SDT data has been received.

In step S1207, MN 1220-1 decides to change SN while terminating SDT and fully resuming UE. MN 1220-1 may decide to change SN while terminating SDT and fully resuming UE based on information included in activity notification, for example, information indicating that DL non-SDT user data has arrived.

In step S1209, MN 1220-1 transmits SN modification request message to SN 1220-2. MN 1220-1 may request current SCG configuration or forwarding proposals information by transmitting SN modification request message to SN 1220-2.

In step S1211, SN 1220-2 transmits SN modification request acknowledge message to MN 1220-1 as response to SN modification request message. SN modification request acknowledge message may include current SCG configuration or forwarding proposal information.

In step S1213, MN 1220-1 transmits SN addition request message to new SN 1220-3. That is, MN 1220-1 transmits SN addition request message to new SN 1220-3 to change SN of UE 1210. SN addition request message may include current SCG configuration information.

In step S1215, new SN 1220-3 transmits SN addition request acknowledge message to MN 1220-1. SN addition request acknowledge message may include SN RRC reconfiguration and forwarding TNLs information. Forwarding TNLs information may include TNLs information of new SN for data forwarding between SN 1220-2 and new SN 1220-3.

In step S1217, MN 1220-1 transmits SN release request message to SN 1220-2, and in step S1219, SN 1220-2 transmits SN release request acknowledge message to MN 1220-1 as response to SN release request message. In step S1221, MN 1220-1 provides data forwarding and/or Xn-U address indication information to SN 1220-2. MN 1220-1 may deliver TNLs information received from new SN 1220-3 to SN 1220-2 for data forwarding between SN 1220-2 and new SN 1220-3.

In step S1223, MN 1220-1 transmits RRC resume message. RRC resume message may be RRC connection resume message and may include SN RRC reconfiguration information. In step S1225, UE 1210 transmits RRC resume complete message to MN 1220-1. RRC resume complete message may include information indicating SN RRC reconfiguration complete. Accordingly, UE 1210 may be fully resumed. In step S1227, UE 1210 may perform random access procedure for new SN 1220-3.

In step S1229, MN 1220-1 delivers SN RRC reconfiguration complete message received from UE 1210 to new SN 1220-3. In step S1231, SN 1220-2 delivers DL SDT user data to new SN 1220-3, and new SN 1220-3 delivers DL SDT to UE 1210. When SN RRC reconfiguration complete message is received, new SN 1220-3 may recognize that UE 1210 is fully resumed and deliver DL non-SDT user data to UE 1210.

Embodiment described with reference to FIGS. 12a and 12b described case where DL non-SDT user data arrives at SN in state where UE is resumed for SDT. However, DL non-SDT user data or signaling may arrive at MN in state where UE is resumed for SDT. In this case, MN may decide SDT operation termination, and step S1209 and subsequent steps may be performed.

### Embodiment #5: Supporting SDT Termination Request at SN

Embodiment #5 is variant embodiment of Embodiment #1, where SN requests termination of ongoing SDT procedure. In Embodiment #5, when SN requests SDT termination, MN may decide SDT operation termination and release UE to send UE to inactive state.

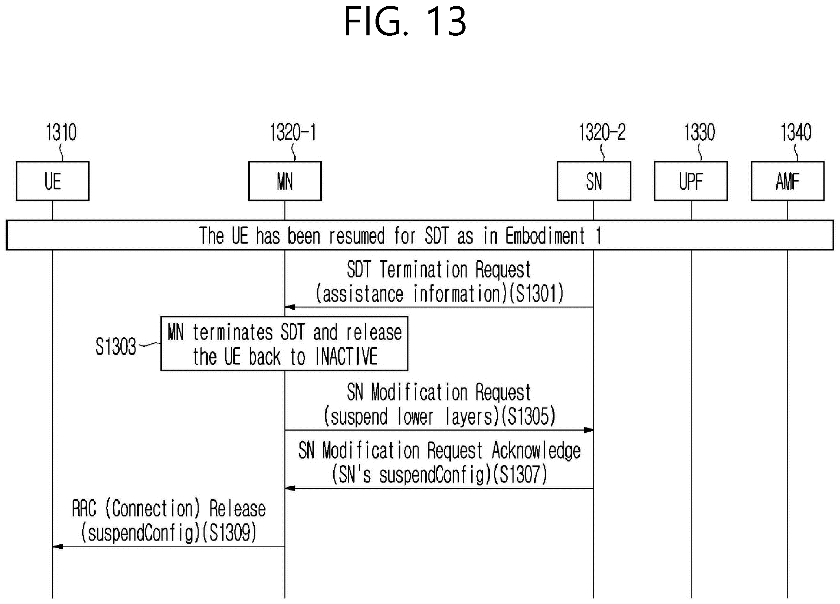

FIG. 13 illustrates an example of a procedure supporting SDT termination request at SN according to an embodiment of the present disclosure. FIG. 13 assumes situation where UE is resumed for SDT as in Embodiment #1. In other words, procedure of FIG. 13 below may be performed after steps S901 to S931 of FIGS. 9a and 9b are performed.

Referring to FIG. 13, in step S1301, SN 1320-2 transmits SDT termination request message to MN 1320-1. SDT termination request message may include assistance information helping SDT termination decision. For example, SDT termination request message may include information indicating that request is due to radio link problem, or information indicating that request is due to normal termination of SDT session by deactivation of SN.

In step S1303, MN 1320-1 decides SDT termination and release of UE to return UE to inactive state. MN 1320-1 may decide SDT termination and release of UE to return UE to inactive state based on assistance information included in SDT termination request message.

In step S1305, MN 1320-1 transmits SN modification request message to SN 1320-2. SN modification request message may include information requesting suspension of lower layer. For example, MN 1320-1 may request SN 1320-2 to suspend lower layer of SN using SN modification request message.

In step S1307, SN 1320-2 transmits SN modification request acknowledge message to MN 1320-1. That is, SN 1320-2 may transmit SN modification request acknowledge message including suspend configuration information of SN for UE to MN.

In step S1309, MN 1320-1 transmits RRC release message to UE 1310. RRC release message may be RRC connection release message. RRC release message may include suspend configuration information. Suspend configuration information may include at least one of suspend configuration information of MN or suspend configuration information of SN. UE 1310 that received RRC release message from MN 1320-1 may be transitioned to inactive state.

In embodiment described with reference to FIG. 13, MN may decide to release SN upon SDT termination. For example, when SDT termination request of step S1303 is request due to radio link problem, MN may decide SN release. In this case, before sending UE back to inactive state by transmitting RRC release message to UE, MN may trigger SN release request procedure to release SN and perform RRC reconfiguration to release UE and SCG. During SN release procedure, PDU sessions or DRBs established at SN may be relocated to MN and reconfigured to UE. In this case, DL SDT data stored at SN may be forwarded to MN before RRC release message is transmitted to UE and may be delivered from MN to UE.

In embodiment described with reference to FIG. 13, when MN decides to fully resume UE in step S1303, steps after step S1107 of Embodiment #3 may be performed after step S1303.

### Embodiment #6: Supporting SN Change Upon SDT Termination Request at SN

Embodiment #6 is variant embodiment of Embodiment #2 and Embodiment #5, which terminates SDT procedure and changes SN. In Embodiment #6, when MN receives SDT termination request from SN, MN may decide SDT operation termination and decide to release UE and transition to inactive state together with SN change.

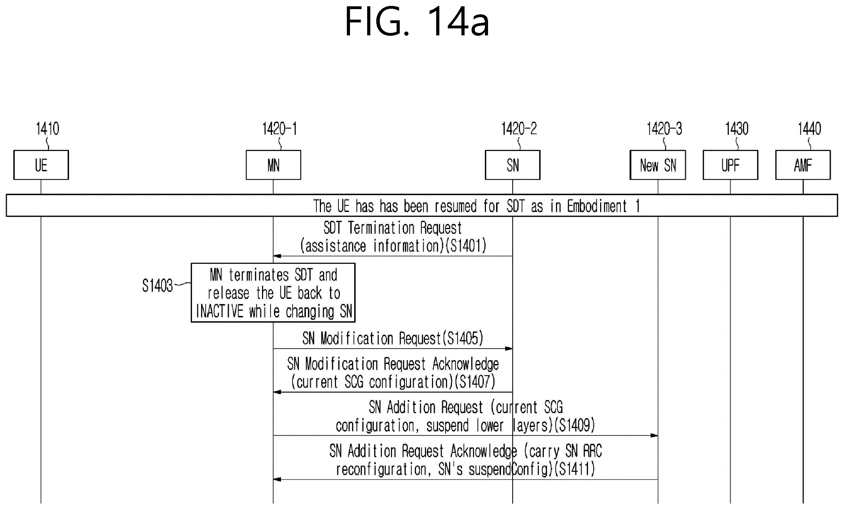

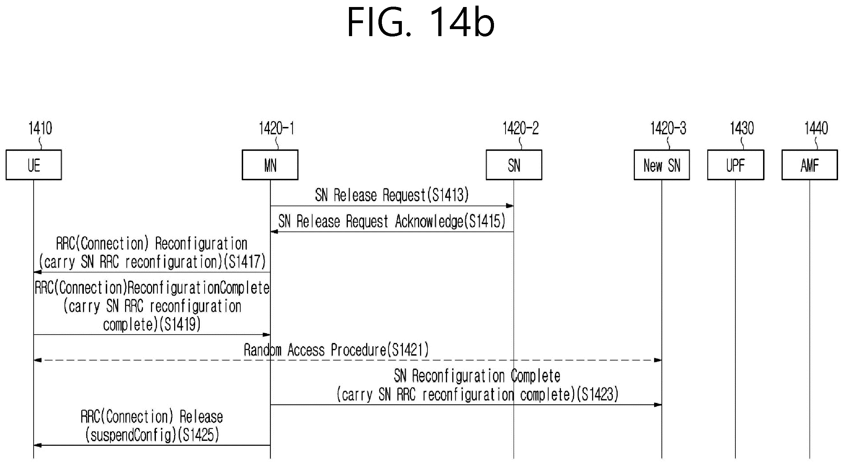

FIG. 14a and FIG. 14b illustrate an example of a procedure for changing SN upon SDT termination request of SN according to an embodiment of the present disclosure. FIGS. 14a and 14b assume situation where UE is resumed for SDT as in Embodiment #1. In other words, procedure of FIGS. 14a and 14b below may be performed after steps S901 to S931 of FIGS. 9a and 9b are performed.

Referring to FIGS. 14a and 14b, in step S1401, SN 1420-2 transmits SDT termination request message to MN 1420-1. SDT termination request message may include assistance information helping SDT termination decision. For example, SDT termination request message may include information indicating that request is due to radio link problem, or information indicating that request is due to normal termination of SDT session by deactivation of SN.

In step S1403, MN 1420-1 decides to change SN while terminating SDT and releasing UE to send UE back to inactive state. MN 1420-1 may decide to change SN while terminating SDT and releasing UE to send UE back to inactive state based on assistance information included in SDT termination request message.

In step S1405, MN 1420-1 transmits SN modification request message to SN 1420-2. MN 1420-1 may request current SCG configuration information by transmitting SN modification request message to SN 1420-2.

In step S1407, SN 1420-2 transmits SN modification request acknowledge message to MN 1420-1 as response to SN modification request message. SN modification request acknowledge message may include current SCG configuration information.

In step S1409, MN 1420-1 transmits SN addition request message to new SN 1420-3. That is, MN 1420-1 transmits SN addition request message to new SN 1420-3 to change SN of UE 1410. SN addition request message may include current SCG configuration information and lower layer suspension request information. Lower layer suspension request information may request suspension of lower layer of new SN while new SN is being established.

In step S1411, new SN 1420-3 transmits SN addition request acknowledge message to MN 1420-1. SN addition request acknowledge message may include SN RRC reconfiguration information and suspend configuration information of SN.

In step S1413, MN 1420-1 transmits SN release request message to SN 1420-2, and in step S1415, SN 1420-2 transmits SN release request acknowledge message to MN 1420-1 as response to SN release request message. Through this, MN 1420-1 may release existing SN 1420-2 for UE 1410.

In step S1417, MN 1420-1 transmits RRC reconfiguration message to UE 1410. RRC reconfiguration message may be RRC connection reconfiguration message. RRC reconfiguration message may include SN RRC reconfiguration information received from new SN 1420-3.

In step S1419, UE 1410 transmits RRC reconfiguration complete message to MN 1420-1, and in step S1421, UE 1410 performs random access procedure for new SN 1420-3. RRC reconfiguration complete message may be RRC connection reconfiguration complete message and may include information indicating SN RRC reconfiguration complete. UE 1410 may perform configuration for new SN 1420-3 based on SN RRC reconfiguration information included in RRC reconfiguration message and then transmit RRC reconfiguration complete message to MN 1420-1.

In step S1423, MN 1420-1 delivers SN RRC reconfiguration complete message received from UE 1410 to new SN 1420-3.

In step S1425, MN 1420-1 transmits RRC release message to UE 1410. RRC release message may be RRC connection release message. RRC release message may include suspend configuration information. Suspend configuration information may include at least one of suspend configuration information of MN or suspend configuration information of new SN. UE 1410 that received RRC release message from MN 1420-1 may be transitioned to inactive state.

In embodiment described with reference to FIGS. 14a and 14b, when MN decides to fully resume UE, step S1113 of Embodiment #3 and subsequent steps may be performed after step S1415.

As described above, the present disclosure proposes method and apparatus supporting SDT through dual connectivity in network system. Network system of the present disclosure includes network nodes interconnected through X2 or Xn interface, that is, MN and SN, to service UE using dual connectivity.

According to an embodiment, MN may request SN for configuration of at least one of whether UE can perform SCG SDT, bearer for SDT, or SDT data volume threshold. Or, SN may determine and/or configure SDT bearer for SCG SDT of UE by itself. When SN cannot support SCG SDT for UE, SN may reject MN's request using dedicated cause value. SN may notify MN when DL SDT user data or UL SDT user data received through SCG exceeds SDT data volume threshold.

According to an embodiment, MN may decide to send UE to inactive state and request SN to suspend lower layer. SN may provide configuration information for suspended part to MN. When DL SDT user data for UE in inactive state arrives, SN may notify MN of this using activity notification message. Activity notification message may include information related to DL SDT user data. For example, activity notification message may include DL SDT data volume information. MN may decide whether to trigger legacy RAN paging or SDT paging based on activity notification message. When SDT paging trigger is decided, MN transmits paging message including information indicating DL SDT user data arrival for SCG. UE that received paging message in inactive state may start resume request to MN. UE may check timing alignment with resumed PSCell and perform RACH procedure if necessary. Resume request message transmitted from UE to MN may include at least one of information indicating whether resumed SCG is synchronized, SCG cell measurement result, or information indicating whether there is pending UL SDT data through SCG.

According to an embodiment, MN may maintain SN of UE as current SN or change to new SN. When deciding to maintain SN of UE, MN may request to resume SN only for SCG SDT bearer. When deciding to change SN of UE, MN may change SN of UE from current SN to new SN by performing SN change procedure. MN may configure new SN so that only SDT bearer is resumed and non-SDT bearer is suspended while configuring new SN. SN may stop notifying MN of arrival of DL SDT user data through SCG.

According to an embodiment, SN may inform MN that DL non-SDT user data has arrived at SN. When DL non-SDT user data arrives at SN, MN may decide to terminate ongoing SDT and fully resume UE. At this time, MN may maintain SN of UE as current SN or change to new SN. When deciding to maintain SN of UE, MN may request SN to resume lower layer before sending RRC resume message to UE. When deciding to change SN of UE, MN may change SN of UE from current SN to new SN by performing SN change procedure before sending RRC resume message to UE.

According to an embodiment, SN may request SDT termination to MN and provide information related to SDT termination to MN. Information related to SDT termination may indicate reason for SDT termination such as radio link problem or normal termination of SDT session due to deactivation of SN. Based on SDT termination request of SN, MN may decide termination of ongoing SDT. At this time, MN may maintain SN of UE as current SN, change to new SN, or release SN of UE. When deciding to maintain SN of UE, MN may request SN to suspend or resume lower layer before sending UE back to inactive state or fully resuming UE. SN may provide suspend configuration information to MN. When deciding to change SN of UE, MN may change SN of UE from current SN to new SN by performing SN change procedure before fully resuming UE or sending UE back to inactive state. When deciding to release SN of UE, MN may perform SN release procedure before fully resuming UE or sending UE back to inactive state.

As described in above embodiments, the present disclosure enables network node to support small data transmission (SDT) for UE configured to have dual connectivity, so that SCG of UE may continue or be changed for SDT operation without being forcibly released.

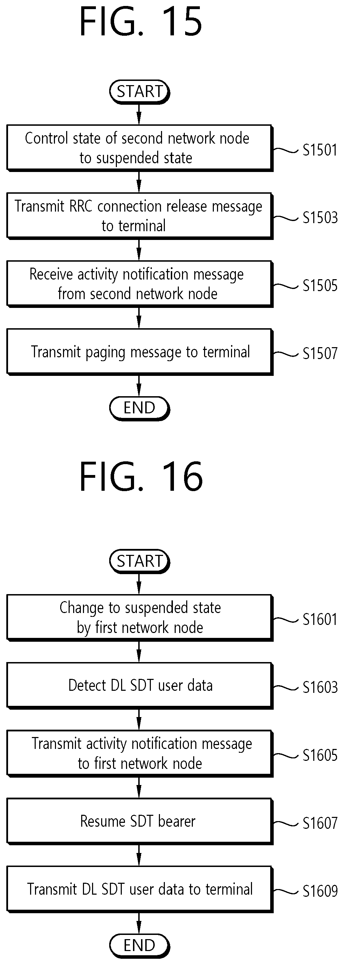

FIG. 15 illustrates an example of procedure for transmitting paging message for DL SDT according to an embodiment of the present disclosure. FIG. 15 illustrates method performed by first network node. First network node may include MN. For example, first network node may be MN described with reference to FIGS. 9a to 14b.

Referring to FIG. 15, in step S1501, first network node controls state of second network node to suspended state. First network node decides state of terminal to inactive state and requests second network node to suspend lower layer. Here, terminal may include UE supporting SDT through SCG, and second network node may include SN. Terminal may receive service through MCG managed by first network node and/or SCG managed by second network node by being dual-connected to first network node and second network node. First network node may be interconnected with second network node through X2 or Xn interface. First network node transmits modification request message to second network node to suspend lower layer of second network node for terminal and receives modification request acknowledge message from second network node. Modification request message may include SN modification request message. Modification request message may include at least one of information requesting suspension of lower layer of second network node, information indicating whether terminal is SCG SDT capable, bearer information for SDT, or SDT data volume threshold for subsequent notification. Modification request acknowledge message may include SN modification request acknowledge message. SN modification request acknowledge message may include suspend configuration information of second network node. Suspend configuration information of second network node may include configuration information for transitioning RRC connection state of terminal for second network node to inactive state.

In step S1503, first network node transmits RRC connection release message to terminal. That is, first network node transmits RRC connection release message to terminal to transition state of terminal to RRC inactive state. RRC connection release message may include at least one of suspend configuration information of first network node or suspend configuration information of second network node. Suspend configuration information of first network node may include configuration information for transitioning RRC connection state of terminal for first network node to inactive state.

In step S1505, first network node receives activity notification message from second network node. First network node receives activity notification message from second network node during inactivity period of terminal. Activity notification message may include information about volume of DL SDT data that arrived at second network node.

In step S1507, first network node transmits paging message to terminal. First network node may determine whether to trigger legacy RAN paging or SDT paging based on activity notification message received from second network node and transmit paging message to terminal based on decision. For example, first network node may decide whether to trigger legacy RAN paging or SDT paging based on volume information of DL SDT data included in activity notification message. If volume information of DL SDT data is less than or equal to SDT data volume threshold, first network node may decide to trigger SDT paging. On the other hand, if volume information of DL SDT data is greater than SDT data volume threshold, first network node may decide to trigger legacy RAN paging. Paging message transmitted to terminal may include information indicating triggered paging. For example, when SDT paging is triggered, paging message may include information indicating SDT paging due to DL SDT data arrival for SCG.

According to an embodiment, first network node may receive RRC resume request message from terminal that received paging message for SDT paging. RRC resume request message may include assistance information helping determine whether to resume second network node. For example, RRC resume request message may include at least one of information indicating whether resumed SCG is synchronized, SCG cell measurement result, or information indicating whether UL SDT data for SCG is pending. Also, RRC resume request message may further include UL SDT data or signaling for MCG.

According to an embodiment, first network node that received RRC resume request message may request second network node to resume only bearer for SDT. For example, first network node may transmit modification request message requesting to resume only SDT bearer to second network node and receive acknowledgement message for it. Accordingly, bearer for SDT is resumed at second network node, and DL SDT user data may be transmitted to terminal through resumed bearer for SDT.

FIG. 16 illustrates an example of a procedure for transmitting DL SDT according to an embodiment of the present disclosure. FIG. 16 illustrates method performed by second network node. Second network node may include SN. For example, second network node may be SN described with reference to FIGS. 9a to 14b.

Referring to FIG. 16, in step S1601, second network node is changed to suspended state by first network node. Second network node may receive message requesting suspension of lower layer of second network node for terminal from first network node and configure lower layer to suspended state in response. Here, first network node may include MN, and terminal may include UE supporting SDT through SCG. First network node may be interconnected with second network node through X2 or Xn interface. For example, second network node receives modification request message from first network node and transmits modification request acknowledge message to first network node. Modification request message may include SN modification request message. Modification request message may include at least one of information requesting suspension of lower layer of second network node, information indicating whether terminal is SCG SDT capable, bearer information for SDT, or SDT data volume threshold for subsequent notification. Modification request acknowledge message may include SN modification request acknowledge message. SN modification request acknowledge message may include suspend configuration information of second network node.

In step S1603, second network node detects DL SDT user data. Second network node may detect that DL SDT user data or signaling for terminal arrives at second network node during inactivity period for terminal.

In step S1605, second network node transmits activity notification message. Second network node may transmit activity notification message to first network node to inform first network node that DL SDT user data or signaling for terminal has arrived at second network node. Activity notification message may include DL SDT data volume information. DL SDT data volume information may indicate volume of DL SDT user data that arrived at second network node.

In step S1607, second network node resumes bearer for SDT. Second network node may resume bearer for SDT for terminal based on request of first network node. Specifically, second network node receives modification request message requesting to resume only bearer for SDT from first network node and transmits modification request acknowledge message in response. Second network node may resume bearer for SDT of terminal based on modification request message requesting to resume only bearer for SDT. At this time, second network node may resume bearer configured based on bearer information for SDT received in step S1601 or bearer configured by second network node as SDT bearer.

In step S1609, second network node transmits DL SDT user data to terminal. Second network node may transmit DL SDT user data to terminal through resumed SDT bearer.

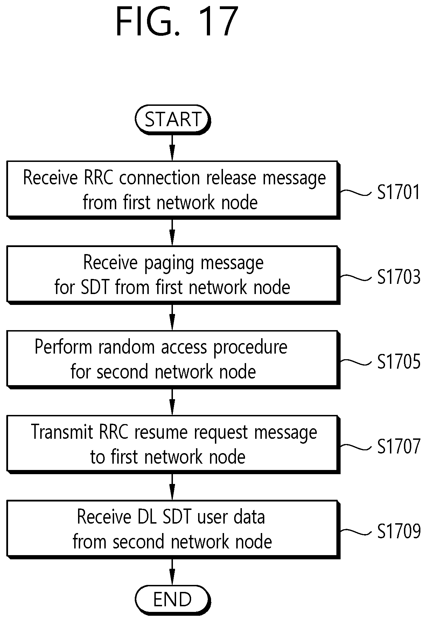

FIG. 17 illustrates an example of a procedure for receiving DL SDT according to an embodiment of the present disclosure. FIG. 17 illustrates method performed by terminal. Terminal may include UE supporting SDT through SCG. For example, terminal may be UE described with reference to FIGS. 9a to 14b.

Referring to FIG. 17, in step S1701, terminal receives RRC connection release message from first network node. RRC connection release message may include at least one of suspend configuration information of first network node or suspend configuration information of second network node. Suspend configuration information of first network node may include configuration information for transitioning RRC connection state between terminal and first network node to inactive state, and suspend configuration information of second network node may include configuration information for transitioning RRC connection state between terminal and second network node to inactive state.

In step S1703, terminal receives paging message for SDT from first network node. Paging message for SDT may include information indicating SDT paging due to DL SDT data arrival for SCG.

In step S1705, terminal performs random access procedure for second network node. When paging message for SDT is received, terminal may perform RACH procedure with resumed PSCell to support SDT through SCG. Through this, terminal may check timing alignment with PSCell. Depending on embodiment, RACH procedure with PSCell may be omitted. For example, when timing alignment with PSCell is performed, RACH procedure may be omitted.

In step S1707, terminal transmits RRC resume request message to first network node. RRC resume request message may include at least one of information indicating whether resumed SCG is synchronized, SCG cell measurement result, or information indicating whether UL SDT data through SCG is pending. Such information may be used for first network node to determine whether to resume second network node and whether to change second network node. Also, RRC resume request message may include UL SDT data or signaling for MCG.

In step S1709, terminal receives DL SDT user data from second network node. Terminal may receive DL SDT user data or signaling on SCG managed by second network node through resumed SDT bearer of second network node.

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a first network node in a wireless communication system, comprising:
transmitting a modification request message to a second network node;
receiving an acknowledgement message for the modification request message from the second network node;
transmitting a radio resource control (RRC) connection release message to a terminal to change a state of the terminal to an RRC inactive state;
receiving an activity notification message from the second network node; and
transmitting a paging message to the terminal based on the activity notification message,
wherein the activity notification message includes information about downlink small data for the terminal that arrived at the second network node, and
wherein the paging message indicates a legacy paging or a paging for a downlink small data transmission (SDT) based on the information about the downlink small data.

2. The method of claim 1,
wherein the information about the downlink small data includes volume information of the downlink small data for the terminal that arrived at the second network node.

3. The method of claim 1,
wherein the modification request message includes at least one of information requesting a suspension of a lower layer of the second network node, information informing whether the terminal supports a small data transmission (SDT) through a secondary cell group (SCG), bearer information for the SDT, or threshold information for an SDT data volume.

4. The method of claim 3, further comprising:
receiving a message from the second network node notifying that the downlink small data having a volume greater than a threshold has arrived at the second network node.

5. The method of claim 1,
wherein the acknowledgement message for the modification request message includes at least one of configuration information related to a suspension of a lower layer of the second network node.

6. The method of claim 1, further comprising:
when the paging message indicates a paging for the downlink small data transmission, receiving an RRC resume request message from the terminal; and
requesting the second network node to resume a bearer for the downlink small data transmission.

7. The method of claim 6,
wherein the RRC resume request message includes at least one of whether a resumed SCG is synchronized, an SCG cell measurement result, uplink SDT data for a master cell group (MCG), or a presence of pending uplink SDT data for an SCG.

8. The method of claim 6, further comprising:
controlling so that a secondary node for a dual connectivity of the terminal is changed from the second network node to a third network node.

9. The method of claim 8,
wherein controlling to be changed from the second network node to the third network node comprises:
requesting the third network node to resume the bearer for the downlink small data transmission; and
releasing the second network node.

10. The method of claim 1, further comprising:
receiving a message from the second network node informing that data not corresponding to the downlink small data has arrived; and
terminating an operation for the downlink small data transmission and controlling so that an RRC connection of the terminal is fully resumed.

11. The method of claim 1, further comprising:
receiving a message requesting a termination of the downlink small data transmission from the second network node; and
terminating an operation for the downlink small data transmission and controlling so that a state of the terminal returns to an RRC inactive state.

12. A method performed by a second network node in a wireless communication system, comprising:
receiving a modification request message from a first network node;
transmitting an acknowledgement message for the modification request message to the second network node;
transmitting an activity notification message to the first network node;
resuming a bearer for small data transmission (SDT) by a request of the first network; and
transmitting small data to the terminal through the resumed bearer,
wherein the activity notification message includes information about downlink small data for the terminal that arrived at the second network node.

13. The method of claim 12,
wherein a lower layer of the second network node is suspended based on the modification request message.

14. A method performed by a terminal in a wireless communication system, comprising:
receiving an RRC connection release message from a first network node;
receiving a paging message for downlink small data transmission (SDT) from the first network node;
performing a random access procedure for a second network node;
transmitting an RRC resume request message to the first network node; and
receiving downlink small data from the second network node.

15. A first network node in a wireless communication system, comprising:
a transceiver; and
a processor connected to the transceiver,
wherein the processor is configured to control to:
transmit a modification request message to a second network node;
receive an acknowledgement message for the modification request message from the second network node;
transmit a radio resource control (RRC) connection release message to a terminal to change a state of the terminal to an RRC inactive state;
receive an activity notification message from the second network node; and
transmit a paging message to the terminal based on the activity notification message,
wherein the activity notification message includes information about downlink small data for the terminal that arrived at the second network node, and
wherein the paging message indicates a legacy paging or a paging for a downlink small data transmission (SDT) based on the information about the downlink small data.

16. A second network node in a wireless communication system, comprising:
a transceiver; and
a processor connected to the transceiver,
wherein the processor is configured to control to:
receive a modification request message from a first network node;
transmit an acknowledgement message for the modification request message to the second network node;
transmit an activity notification message to the first network node;
resume a bearer for small data transmission (SDT) by a request of the first network; and
transmit small data to the terminal through the resumed bearer,
wherein the activity notification message includes information about downlink small data for the terminal that arrived at the second network node.

17. A terminal in a wireless communication system, comprising:
a transceiver; and
a processor connected to the transceiver,
wherein the processor is configured to control to:
receive an RRC connection release message from a first network node;
receive a paging message for downlink small data transmission (SDT) from the first network node;
perform a random access procedure for a second network node;
transmit an RRC resume request message to the first network node; and
receive downlink small data from the second network node.

18. A communication apparatus, comprising:
at least one processor;
at least one computer memory connected to the at least one processor and storing instructions that, based on being executed by the at least one processor, perform operations comprising:
receiving an RRC connection release message from a first network node;
receiving a paging message for downlink small data transmission (SDT) from the first network node;
performing a random access procedure for a second network node;
transmitting an RRC resume request message to the first network node; and
receiving downlink small data from the second network node.

19. A non-transitory computer-readable medium storing at least one instruction, comprising:
the at least one instruction executable by a processor,
wherein the at least one instruction controls an apparatus to:
receive an RRC connection release message from a first network node;
receive a paging message for downlink small data transmission (SDT) from the first network node;
perform a random access procedure for a second network node;
transmit an RRC resume request message to the first network node; and
receive downlink small data from the second network node.
